(19) Europäisches Patentamt
European Patent Office
Office européen des brevets

(11) EP 4 707 311 A1

(12) **EUROPEAN PATENT APPLICATION**
published in accordance with Art. 153(4) EPC

(43) Date of publication:
**11.03.2026 Bulletin 2026/11**

(21) Application number: **25811511.2**

(22) Date of filing: **21.04.2025**

(51) International Patent Classification (IPC):
***C08F 210/16*** (2006.01) ***C08F 4/659*** (2006.01)
***C08F 4/6592*** (2006.01) ***C08J 5/18*** (2006.01)
***B29C 55/12*** (2006.01)

(52) Cooperative Patent Classification (CPC):
**B29C 55/12; C08F 4/659; C08F 4/6592; C08F 210/16; C08J 5/18**

(86) International application number:
**PCT/KR2025/005352**

(87) International publication number:
**WO 2026/010095 (08.01.2026 Gazette 2026/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **01.07.2024 KR 20240086289**
**16.04.2025 KR 20250049749**

(71) Applicant: **LG CHEM, LTD.**
**Yeongdeungpo-gu**
**Seoul 07336 (KR)**

(72) Inventors:
- **KWON, Yongwoo**
  **Daejeon 34122 (KR)**
- **KIM, Taejin**
  **Daejeon 34122 (KR)**
- **SONG, Eun Kyoung**
  **Daejeon 34122 (KR)**
- **JEON, Hyun Woo**
  **Daejeon 34122 (KR)**
- **KIM, Sun Mi**
  **Daejeon 34122 (KR)**
- **KWON, Hyuk Bu**
  **Daejeon 34122 (KR)**
- **KIM, Jonghyun**
  **Daejeon 34122 (KR)**
- **JUNG, Jin**
  **Daejeon 34122 (KR)**
- **CHOI, Eun Yeob**
  **Daejeon 34122 (KR)**
- **KIM, Yeong Bum**
  **Daejeon 34122 (KR)**
- **KIM, Dong Hyun**
  **Daejeon 34122 (KR)**

(74) Representative: **Hoffmann Eitle**
**Patent- und Rechtsanwälte PartmbB**
**Arabellastraße 30**
**81925 München (DE)**

# (54) POLYETHYLENE COPOLYMER AND BIAXIALLY STRETCHED FILM COMPRISING SAME

(57) The present disclosure relates to a polyethylene copolymer suitable for producing a biaxially oriented film with improved heat resistance by enhancing the molecular weight of high-crystalline fraction, and a film comprising the same.

EP 4 707 311 A1

## Description

[TECHNICAL FIELD]

The present disclosure relates to a polyethylene suitable for producing a biaxially oriented film with improved heat resistance by enhancing the molecular weight of a high-crystalline fraction, and a film comprising the same.

Cross-Reference to Related Applications

This application claims the benefit of priority based on Korean Patent Applications No. 10-2024-0086289 filed on July 1, 2024, and No. 10-2025-0049749 filed on April 16, 2025, and all disclosures in the document of the said Korean Patent Application are comprised as a part of this specification.

[BACKGROUND ART]

Thin film products manufactured from linear low density polyethylene (LLDPE) and/or high density polyethylene (HDPE) are widely used in packaging applications such as merchandise bags, grocery bags, food and specialty packaging, and industrial liners. In these applications, shrink films, which make it possible to package products while maintaining their shape, are mainly used, thereby providing a function of protecting the products from touch during display.

In particular, among such shrink films, biaxially oriented polymer films are widely used for packaging applications due to their excellent properties such as mechanical strength, productivity, and printability. Commercialized packaging films generally use BOPP (bi-axially oriented polypropylene), BOPET (biaxially-oriented polyethylene terephthalate), or BOPA (biaxially-oriented polyamide) for the printing layer, and use an LLDPE film for the sealing layer. This composite material structures are not recyclable, and with the expansion of regulations on the recycling of packaging materials, the demand for single-material is increasing. Therefore, research and development are underway to produce single-material packaging films by replacing the film of the printing layer with a biaxially-oriented polyethylene (BOPE) film.

However, commercial polyethylene (PE) resins do not have sufficient stretching stability, and phenomena such as breakage and melting occur during stretching, making biaxial stretching of PE difficult. In order to have stretching properties and stretching stability, the resin must have both a low MI-high density/high MI-low density structure. Although techniques using a dual reactor to derive the separation of resin crystals and molecular weight have been reported for producing such PE resins, these methods involve high production costs.

Accordingly, there is a need to develop a polyethylene copolymer for biaxial stretching by selecting a polyethylene resin with a molecular structure favorable for stretching that can be produced in a single reactor, which exhibits stretching stability during biaxial stretching and satisfactory film mechanical properties.

[DETAILED DESCRIPTION OF THE INVENTION]

[TECHNICAL PROBLEM]

The present disclosure relates to a polyethylene copolymer suitable for producing a biaxially oriented film with improved heat resistance by enhancing the molecular weight of high-crystalline fraction, and a film comprising the same.

[TECHNICAL SOLUTION]

In one embodiment of the present disclosure, there is provided a polyethylene copolymer,

wherein a backbone weight-average molecular weight of high-crystalline fraction ($Mw,_{T>90°C}$) eluted at an elution temperature exceeding 90 °C during cross fractionation chromatography (CFC) analysis is 90,000 g/mol or more, and a content ratio of high-crystalline fraction ($TREF_{T>90°C}$) eluted at an elution temperature exceeding 90 °C during cross fractionation chromatography (CFC) analysis is 45.0 wt% or more of total eluted fraction.

In another embodiment of the present disclosure, there is provided a biaxially oriented film including the polyethylene copolymer of one embodiment.

The terminology used herein is for the purpose of describing particular embodiments only and is not intended to be limiting of the invention.

The singular forms are intended to include the plural forms as well, unless the context clearly indicates otherwise.

In this disclosure, the terminology "include" , "comprise" , or "have" is used to describe stated features, numbers, steps, components, or combination thereof, and do not preclude the addition of one or more other features, numbers,

steps, components, or combinations thereof.

The terminology "about" or "substantially" is intended to have meanings close to numerical values or ranges specified with an allowable error and intended to prevent accurate or absolute numerical values disclosed for understanding of the present invention from being illegally or unfairly used by any unconscionable third party.

Further, in the present disclosure, the (co)polymer is meant to include both a homo-polymer and a co-polymer.

Unless otherwise defined herein, "copolymerization" may mean block copolymerization, random copolymerization, graft copolymerization or alternating copolymerization, and "copolymer" means block copolymer, random copolymer, graft copolymer or alternating copolymer.

As the present invention can be variously modified and have various forms, specific embodiments thereof are shown by way of examples and will be described in detail. However, it is not intended to limit the present invention to the particular form disclosed and it should be understood that the present invention includes all modifications, equivalents, and replacements within the idea and technical scope of the present invention.

Hereinafter, the present disclosure will be described in more detail.

According to one aspect of the present disclosure, there is provided a polyethylene copolymer,

> wherein a backbone weight-average molecular weight of high-crystalline fraction ($Mw_{,T>90°C}$) eluted at an elution temperature exceeding 90 °C during cross fractionation chromatography (CFC) analysis is 90,000 g/mol or more, and a content ratio of high-crystalline fraction ($TREF_{T>90°C}$) eluted at an elution temperature exceeding 90 °C during cross fractionation chromatography (CFC) analysis is 45.0 wt% or more of total eluted fraction.

In addition, "part by weight" as used herein refers to a relative concept of a ratio of the weight of the remaining material based on the weight of a specific material. For example, in a mixture containing 50 g of material A, 20 g of material B, and 30 g of material C, the amounts of material B and C based on 100 parts by weight of material A are 40 parts by weight and 60 parts by weight, respectively.

Meanwhile, "wt% (% by weight)" refers to an absolute concept of expressing the weight of a specific material in percentage based on the total weight. In the above-described mixture, the contents of material A, B and C based on 100% of the total weight of the mixture are 50 wt %, 20 wt % and 30 wt %, respectively.

The polyethylene copolymer of the present disclosure has a feature of an enhanced backbone weight-average molecular weight of high-crystalline fraction eluted at an elution temperature exceeding 90 °C during cross fractionation chromatography (CFC) analysis, by using a hybrid supported metallocene catalyst including two types of metallocene compounds to be described later. The hybrid supported metallocene catalyst is prepared by supporting together a metallocene compound capable of imparting high molecular weight and high crystallinity and a metallocene compound capable of imparting low molecular weight and low crystallinity, thereby enabling production in a single reactor and providing the effect of reducing production costs. In addition, the polyethylene copolymer has an enhanced backbone weight-average molecular weight of high-crystalline fraction, and thus has a feature of being suitable for the production of a biaxially oriented film with improved heat resistance.

The polyethylene copolymer may have a backbone weight-average molecular weight of high-crystalline fraction ($Mw_{,T>90°C}$) eluted at an elution temperature exceeding 90 °C during cross fractionation chromatography (CFC) analysis of 90,000 g/mol or more. Preferably, the backbone weight-average molecular weight of the high-crystalline fraction ($Mw_{,T>90°C}$) may be 100,000 g/mol or more, 103,000 g/mol or more, or 105,000 g/mol or more, and 200,000 g/mol or less, 180,000 g/mol or less, 150,000 g/mol or less, 130,000 g/mol or less, or 129,000 g/mol or less.

The polyethylene copolymer may have a content ratio of high-crystalline fraction ($TREF_{T>90°C}$) eluted at an elution temperature exceeding 90 °C during cross fractionation chromatography (CFC, cross fractionation chromatography) analysis of 45.0 wt% or more of the total eluted fraction. Preferably, the content ratio of high-crystalline fraction ($TREF_{T>90°C}$) is 47.0 wt% or more, 48.0 wt% or more, or 48.3 wt% or more, and 70 wt% or less, 60 wt% or less, or 56.1 wt% or less.

In the present disclosure, a specific test method related to the cross fractionation chromatography (CFC) is described in Test Example 1, which will be described later. However, the cross fractionation chromatography (CFC) is not limited thereto and may be measured by other methods known in the art to which the present invention pertains.

Meanwhile, the polyethylene copolymer may have a density of 0.920 g/cm$^3$ or more and 0.940 g/cm$^3$ or less. Preferably, the density may be 0.923 g/cm$^3$ or more, 0.925 g/cm$^3$ or more, or 0.926 g/cm$^3$ or more, and 0.937 g/cm$^3$ or less, 0.935 g/cm$^3$ or less, or 0.933 g/cm$^3$ or less.

In addition, the polyethylene copolymer may have a melt index ($MI_{2.16}$) measured according to ASTM D 1238 of 0.5 g/10 min or more and 5.0 g/10 min or less. Preferably, the melt index ($MI_{2.16}$, 190 °C, 2.16 kg load) may be 0.7 g/10 min or more, 1.0 g/10 min or more, 1.2 g/10 min or more, or 1.33 g/10 min or more, and 4.0 g/10 min or less, 3.5 g/10 min or less, 3.0 g/10 min or less, 2.5 g/10 min or less, 2.2 g/10 min or less, 2.0 g/10 min or less, 1.9 g/10 min or less, or 1.88 g/10 min or less.

In addition, the polyethylene copolymer may have MFRR ($MFR_{21.6}/MFR_{2.16}$) of 15 or more and 40 or less.

Preferably, the MFRR ($MFR_{21.6}/MFR_{2.16}$) may be 20 or more and 35 or less, 23 or more and 35 or less, 25.2 or more and 30 or less, or 25.2 or more and 29.8 or less. The $MFR_{21.6}$ of MFRR is measured at 190 °C under a load of 21.6 kg according to ISO 1133, and the $MFR_{2.16}$ is measured at 190 °C under a load of 2.16 kg according to ISO 1133.

Meanwhile, the polyethylene copolymer may be an ethylene/alpha-olefin copolymer, and preferably an ethylene/1-hexene copolymer.

Meanwhile, the polyethylene copolymer having the above physical properties may be a polyethylene copolymer produced by polymerizing an olefinic monomer in the presence of a hybrid supported metallocene catalyst including one or more types of an unbridged metallocene compound comprising an indenyl ligand and a cyclopentadienyl ligand; one or more types of a bridged-metallocene compound comprising a fluorenyl ligand and a cyclopentadienyl ligand; and a support for supporting the unbridged metallocene compound and the bridged metallocene compound.

Preferably, the polyethylene copolymer may be a polyethylene copolymer produced by polymerizing an olefinic monomer in the presence of a hybrid supported metallocene catalyst including one or more types of a first metallocene compound selected from compounds represented by the following Chemical Formula 1; one or more types of a second metallocene compound selected from compounds represented by the following Chemical Formula 2; and a support for supporting the first and second metallocene compounds:

[Chemical Formula 1]

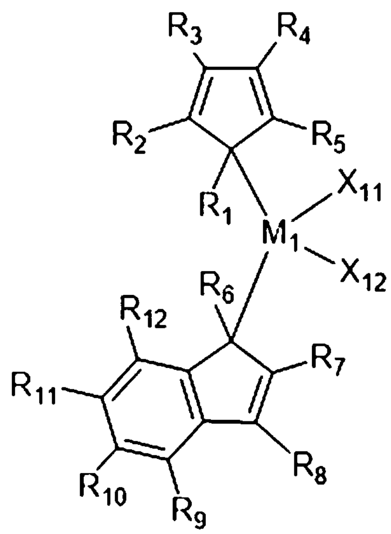

In Chemical Formula 1,

$M_1$ is a Group 4 transition metal,
$X_{11}$ and $X_{12}$ are each independently substituted or unsubstituted $C_{1-20}$ alkyl or halogen,
$R_1$ to $R_5$ and $R_7$ to $R_{12}$ are each independently hydrogen, substituted or unsubstituted $C_{1-20}$ alkyl, substituted or unsubstituted $C_{6-60}$ aryl, or $-(CH_2)_{n1}-O-R_{13}$,
$R_6$ is substituted or unsubstituted $C_{1-20}$ alkyl, substituted or unsubstituted $C_{6-60}$ aryl, or $-(CH_2)_{n1}-O-R_{13}$,
provided that at least one of $R_1$ to $R_{12}$ is $-(CH_2)_{n1}-O-R_{13}$,
$R_{13}$ is substituted or unsubstituted $C_{1-20}$ alkyl, and
n1 is an integer of 0 to 10,

[Chemical Formula 2]

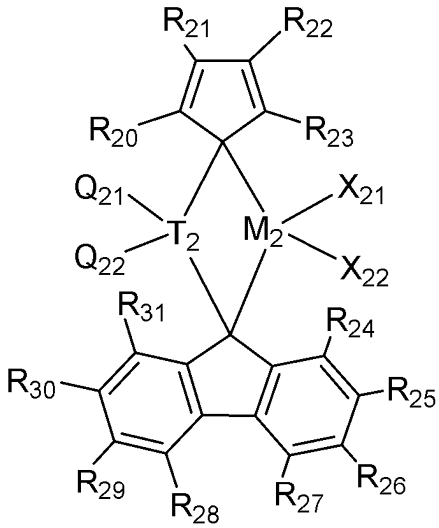

in Chemical Formula 2,

$M_2$ is a Group 4 transition metal,

$X_{21}$ and $X_{22}$ are each independently substituted or unsubstituted $C_{1-20}$ alkyl or halogen,

$T_2$ is C (carbon) or Si (silicon),

$Q_{21}$ and $Q_{22}$ are each independently substituted or unsubstituted $C_{1-20}$ alkyl, substituted or unsubstituted $C_{6-60}$ aryl, or $-(CH_2)_{n2}$-O-$R_{32}$, or $Q_{21}$ and $Q_{22}$ are bonded to each other to form a substituted or unsubstituted $C_{3-20}$ cycloalkyl ring,

$R_{20}$ to $R_{31}$ are each independently hydrogen, substituted or unsubstituted $C_{1-20}$ alkyl, substituted or unsubstituted $C_{6-60}$ aryl, or $-(CH_2)_{n2}$-O-$R_{32}$, or two adjacent groups among $R_{20}$ to $R_{31}$ are bonded to form a substituted or unsubstituted $C_{3-20}$ cycloalkyl ring,

provided that at least one of $R_{20}$ to $R_{31}$, $Q_{21}$, and $Q_{22}$ is $-(CH_2)_{n2}$-O-$R_{32}$,

$R_{32}$ is substituted or unsubstituted $C_{1-20}$ alkyl, and

n2 is an integer of 0 to 10.

In the present disclosure, the substituents of the above Chemical Formulas are described in more detail as follows.

The halogen may be fluorine (F), chlorine (Cl), bromine (Br) or iodine (I).

The $C_{1-20}$ alkyl may be linear, branched, or cyclic alkyl. Specifically, the $C_{1-20}$ alkyl may be $C_{1-20}$ linear alkyl; $C_{1-10}$ linear alkyl; $C_{1-5}$ linear alkyl; $C_{3-20}$ branched or cyclic alkyl; $C_{3-15}$ branched or cyclic alkyl; or $C_{3-10}$ branched or cyclic alkyl. More specifically, the $C_{1-20}$ alkyl may be a methyl group, an ethyl group, an n-propyl group, an iso-propyl group, an n-butyl group, an iso-butyl group, a tert-butyl group, an n-pentyl group, an iso-pentyl group, or a cyclohexyl group.

The $C_{3-20}$ cycloalkyl ring may be a ring composed of carbon atoms. It may be a $C_{3-20}$ hydrocarbon ring; a $C_{3-15}$ hydrocarbon ring; or a $C_{3-10}$ hydrocarbon ring. More specifically, the $C_{3-20}$ cycloalkyl ring may be a cyclopropene ring, a cyclobutene ring, a cyclopentene ring, or a cyclohexene ring.

The $C_{2-20}$ alkenyl may be linear, branched, or cyclic alkenyl. Specifically, the $C_{2-20}$ alkenyl may be $C_{2-20}$ linear alkenyl, $C_{2-10}$ linear alkenyl, $C_{2-5}$ linear alkenyl, $C_{3-20}$ branched alkenyl, $C_{3-15}$ branched alkenyl, $C_{3-10}$ branched alkenyl,

$C_{5-20}$ cyclic alkenyl, or $C_{5-10}$ cyclic alkenyl. More specifically, the $C_{2-20}$ alkenyl may be ethenyl, propenyl, butenyl, pentenyl, or cyclohexenyl.

The $C_{1-20}$ alkoxy may be a linear, branched, or cyclic alkoxy group. Specifically, the $C_{1-20}$ alkoxy may be a $C_{1-20}$ linear alkoxy group; a $C_{1-10}$ linear alkoxy group; a $C_{1-5}$ linear alkoxy group; a $C_{3-20}$ branched or cyclic alkoxy group; a $C_{3-15}$ branched or cyclic alkoxy group; or a $C_{3-10}$ branched or cyclic alkoxy group. More specifically, the $C_{1-20}$ alkoxy may be a methoxy group, an ethoxy group, an n-propoxy group, an iso-propoxy group, an n-butoxy group, an iso-butoxy group, a tert-butoxy group, an n-pentoxy group, an iso-pentoxy group, a neo-pentoxy group, or a cyclohexyloxy group.

The $C_{2-20}$ alkoxyalkyl may be a substituent having a structure including $-R_y-O-R_z$, in which one or more hydrogens of the alkyl group ($-R_y$) are substituted with an alkoxy group ($-O-R_z$). Specifically, the $C_{2-20}$ alkoxyalkyl may include methoxymethyl, methoxyethyl, ethoxymethyl, iso-propoxymethyl, iso-propoxyethyl, iso-propoxyhexyl, tert-butoxymethyl, tert-butoxyethyl, or tert-butoxyhexyl.

The $C_{6-60}$ aryl may be a monocyclic, bicyclic, or tricyclic aromatic hydrocarbon. Specifically, the $C_{6-60}$ aryl may be a phenyl group, a naphthyl group, or an anthracenyl group.

The $C_{7-20}$ alkylaryl may be a substituent where one or more hydrogens of the aryl are substituted with alkyl. Specifically, the $C_{7-20}$ alkylaryl may be methylphenyl, ethylphenyl, n-propylphenyl, iso-propylphenyl, n-butylphenyl, iso-butylphenyl, tert-butylphenyl, or cyclohexylphenyl.

The $C_{7-20}$ arylalkyl may be a substituent where one or more hydrogens of the alkyl are substituted with aryl. Specifically, the $C_{7-20}$ arylalkyl may be a benzyl group, phenylpropyl, or phenylhexyl.

Further, the Group 4 transition metal may be titanium, zirconium, hafnium, etc.

The hybrid supported metallocene catalyst is a hybrid catalyst that includes a first metallocene compound, which is an unbridged metallocene compound comprising an indenyl ligand and a cyclopentadienyl ligand capable of imparting high molecular weight and high crystallinity, and a second metallocene compound, which is a bridged-metallocene compound comprising a fluorenyl ligand and a cyclopentadienyl ligand capable of imparting low molecular weight and low crystallinity.

In the copolymerization in a single reactor using a hybrid supported metallocene catalyst, it is important to control how the differences in polymerization characteristics between the metallocene compounds constituting the hybrid-supported metallocene catalyst are exhibited under a single copolymerization condition. In particular, in order to obtain a polyethylene copolymer for biaxial stretching, it is necessary for a high molecular weight/high crystallinity component and a low molecular weight/low crystallinity component to be present together. Accordingly, in the present disclosure, a polyethylene copolymer is provided which is produced under a single copolymerization condition using a hybrid supported metallocene catalyst including a combination of the first metallocene compound and the second metallocene compound, thereby exhibiting the respective characteristics of each compound.

The first metallocene compound represented by Chemical Formula 1 has a characteristic of exhibiting a lower rate of polymerization of comonomers and a higher rate of polymerization of ethylene monomers as compared to the second metallocene compound, due to the structure of a non-bridged ligand bonded to the central metal. As a result, under ethylene/1-hexene copolymerization conditions, it can provide polyethylene of high molecular weight and high crystallinity, with a small number of short chain branches (SCBs) and a large Mw.

Meanwhile, the second metallocene compound represented by Chemical Formula 2 has a characteristic of exhibiting a higher rate of polymerization of comonomers and a lower rate of polymerization of ethylene monomers as compared to the first metallocene compound, due to the structure of a bridged ligand bonded to the central metal. As a result, under ethylene/1-hexene copolymerization conditions, it can provide a polyethylene of low molecular weight and low crystallinity, with a large number of SCBs and a small Mw.

Preferably, the central metal ($M_1$) of Chemical Formula 1 may specifically be a Group 4 transition metal of Ti, Zr, or Hf, and more specifically Hf or Zr.

Preferably, $X_{11}$ and $X_{12}$ may each independently be methyl or chloro, and more preferably, $X_{11}$ and $X_{12}$ are both methyl, or both chloro.

Preferably, $R_1$ to $R_5$ and $R_7$ to $R_{12}$ may each independently be hydrogen, substituted or unsubstituted $C_{1-20}$ alkyl, substituted or unsubstituted $C_{6-20}$ aryl, or $-(CH_2)_{n1}-O-R_{13}$, and $R_6$ may be substituted or unsubstituted $C_{1-20}$ alkyl, substituted or unsubstituted $C_{6-20}$ aryl, or $-(CH_2)_{n1}-O-R_{13}$, provided that one or two of $R_1$ to $R_{12}$ are $-(CH_2)_{n1}-O-R_{13}$.

Preferably, one of $R_7$ or $R_8$ is $-(CH_2)_{n1}-O-R_{13}$, while the other thereof, $R_1$ to $R_5$ and $R_9$ to $R_{12}$ may each independently be hydrogen, substituted or unsubstituted $C_{1-20}$ alkyl, substituted or unsubstituted $C_{6-60}$ aryl, or $-(CH_2)_{n1}-O-R_{13}$, and $R_6$ may be substituted or unsubstituted $C_{1-20}$ alkyl, substituted or unsubstituted $C_{6-60}$ aryl, or $-(CH_2)_{n1}-O-R_{13}$.

Preferably, $R_1$ to $R_5$ may each independently be hydrogen, methyl, isopropyl, n-butyl, phenyl, or $-(CH_2)_{n1}-O-R_{13}$. More preferably, $R_1$ to $R_5$ may each independently be hydrogen, methyl, n-butyl, phenyl, or tert-butoxyhexyl.

Preferably, $R_6$ may be $C_{1-20}$ alkyl or $C_{6-20}$ aryl, which is unsubstituted or substituted with $C_{6-10}$ aryl or $Si(R')_3$, wherein R' is $C_{1-20}$ alkyl or $C_{6-10}$ aryl. More preferably, $R_6$ may be $C_{1-20}$ alkyl or $C_{6-20}$ aryl, which is unsubstituted or substituted with phenyl, trimethylsilyl, or triphenylsilyl. Most preferably, $R_6$ may be methyl, ethyl, isopropyl, benzyl, trimethylsilylmethyl, or phenyl.

Preferably, one of $R_7$ or $R_8$ is $-(CH_2)_{n1}-O-R_{13}$, while the other thereof and $R_9$ to $R_{12}$ are hydrogen. More preferably, one of $R_7$ or $R_8$ is tert-butoxyhexyl, while the other thereof and $R_9$ to $R_{12}$ are hydrogen.

Preferably, $R_{13}$ may be tert-butyl.

Preferably, n1 may be an integer of 4 to 10, more preferably, n1 may be an integer of 4 to 7, and most preferably, n1 may be 6.

Preferably, the first metallocene compound represented by the Chemical Formula 1 may be any one selected from the group consisting of:

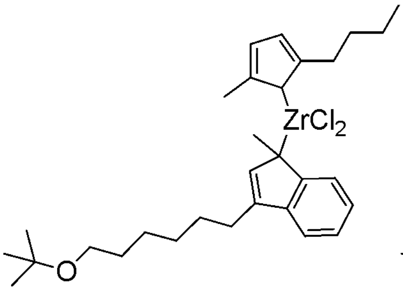
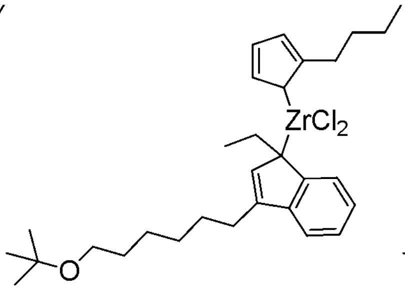
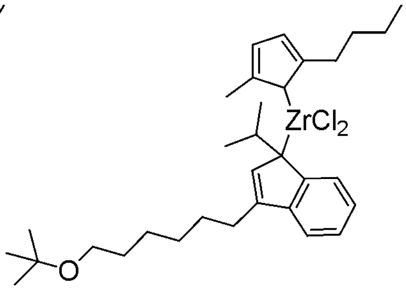

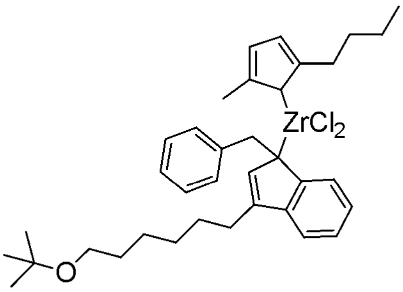
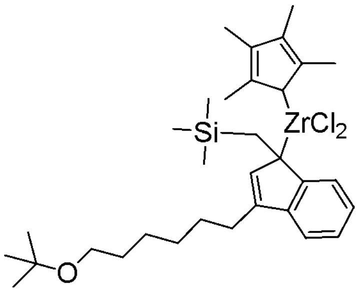
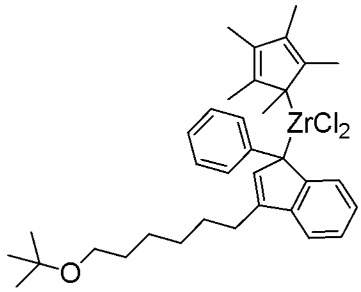

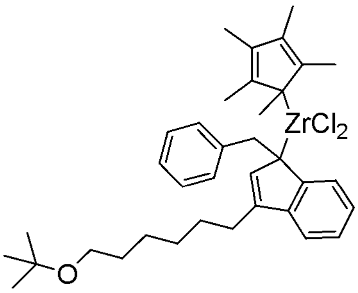
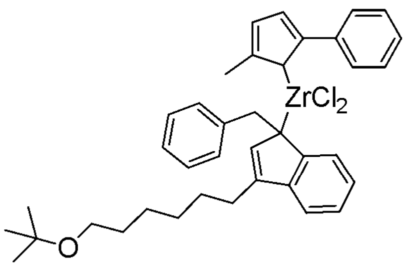
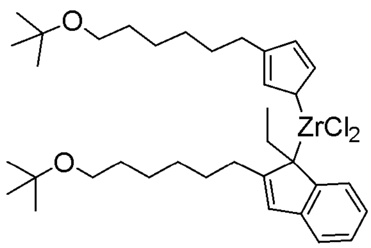

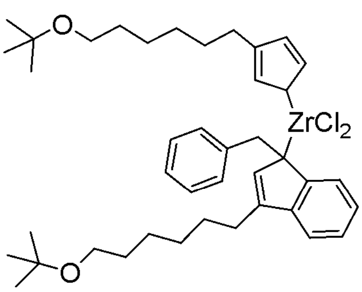
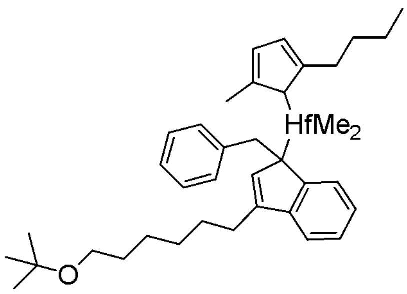
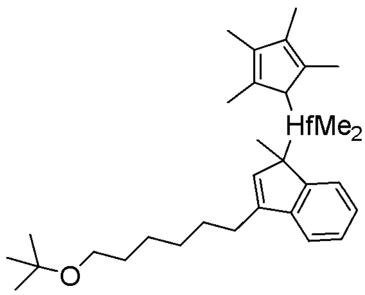

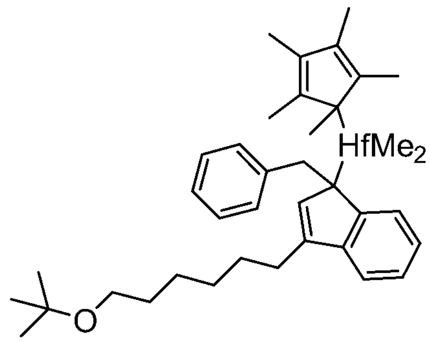

.

Meanwhile, the method for preparing the first metallocene compound represented by Chemical Formula 1 is not particularly limited, but, as one example, the compound may be prepared by a method such as Reaction Scheme 1 below.

Although the compound represented by Chemical Formula 1 is difficult to synthesize due to the steric hindrance of the indenyl ligand, the compound of Chemical Formula 1 may be produced with high yield and high purity according to a method such as Reaction Scheme 1 below.

Accordingly, in one embodiment of the present disclosure, the compound represented by Chemical Formula 1 may be prepared by a preparation method comprising:

a step of preparing a ligand of Chemical Formula 1-3 by reacting a compound represented by Chemical Formula 1-1 with a compound represented by Chemical Formula 1-2; and
a step of reacting the ligand of Chemical Formula 1-3 with a compound represented by Chemical Formula 1-4 and a halogen salt of a transition metal represented by Chemical Formula 1-5:

[Reaction Scheme 1]

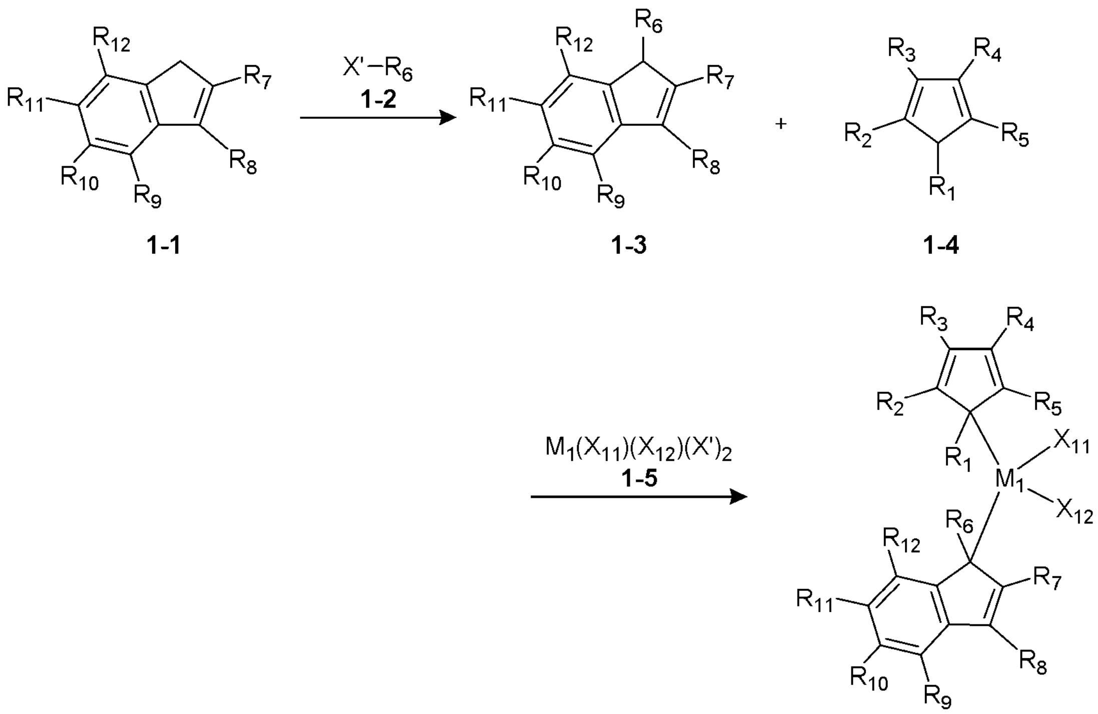


1-1

1-3

1-4

1

In Reaction Scheme 1,

$M_1$, $X_{11}$, $X_{12}$ and $R_1$ to $R_{12}$ are as defined in Chemical Formula 1, and
X' is each independently halogen.

Preferably, the central metal ($M_2$) of Chemical Formula 2 may specifically be a Group 4 transition metal of Ti, Zr, or

Hf, and more specifically Zr.

Preferably, $X_{21}$, and $X_{22}$ may each independently be methyl or chloro, and more preferably, $X_{21}$, and $X_{22}$ are both chloro.

Preferably, $T_2$ may be C (carbon).

Preferably, at least one of $R_{20}$ to $R_{31}$, $Q_{21}$, and $Q_{22}$ may be $-(CH_2)_{n2}-O-R_{32}$. More preferably, at least one of $R_{20}$ to $R_{25}$, $Q_{21}$, and $Q_{22}$ may be $-(CH_2)_{n2}-O-R_{32}$. More preferably, one or two of $R_{20}$ to $R_{31}$, $Q_{21}$, and $Q_{22}$ may be $-(CH_2)_{n2}-O-R_{32}$. More preferably, one or two of $R_{20}$ to $R_{25}$, $Q_{21}$, and $Q_{22}$ may be $-(CH_2)_{n2}-O-R_{32}$. Most preferably, one or two of $R_{20}$ to $R_{25}$, $Q_{21}$, and $Q_{22}$ may be tert-butoxyhexyl.

Preferably, $Q_{21}$ and $Q_{22}$ may each independently be substituted or unsubstituted $C_{1-20}$ alkyl, substituted or unsubstituted $C_{6-20}$ aryl, or $-(CH_2)_{n2}-O-R_{32}$, or $Q_{21}$ and $Q_{22}$ may be bonded to each other to form a substituted or unsubstituted $C_{3-20}$ cycloalkyl ring. More preferably, $Q_{21}$ and $Q_{22}$ may each independently be methyl, ethyl, isopropyl, phenyl, or $-(CH_2)_{n2}-O-R_{32}$, or $Q_{21}$ and $Q_{22}$ may be bonded to each other to form a cyclopentene ring or a cyclohexene ring.

Preferably, $R_{20}$ to $R_{23}$ may each independently be hydrogen, $C_{1-20}$ alkyl, $C_{6-20}$ aryl, or $-(CH_2)_{n2}-O-R_{32}$. More preferably, $R_{20}$ to $R_{23}$ may each independently be hydrogen, methyl, n-butyl, phenyl, or tert-butoxyhexyl. More preferably, one of $R_{20}$ to $R_{23}$ is tert-butoxyhexyl or n-butyl while the others are hydrogen, or two of $R_{20}$ to $R_{23}$ are each independently methyl, n-butyl, or phenyl while the others are hydrogen.

Preferably, $R_{24}$ to $R_{31}$ may each independently be hydrogen, $C_{1-10}$ alkyl, $C_{6-20}$ aryl, or $-(CH_2)_{n2}-O-R_{32}$, or two adjacent groups among $R_{24}$ to $R_{31}$ may be bonded to form a substituted or unsubstituted $C_{3-10}$ cycloalkyl ring. More preferably, $R_{24}$ to $R_{31}$ may each independently be hydrogen, tert-butyl, or tert-butoxyhexyl, or two adjacent groups among $R_{24}$ to $R_{31}$ may be bonded to form a cyclohexane ring substituted with four methyl groups.

Preferably, $R_{32}$ may be tert-butyl.

Preferably, n2 may be an integer of 4 to 10, more preferably, n2 may be an integer of 4 to 7, and most preferably, n2 may be 6.

Preferably, the metallocene compound represented by the Chemical Formula 2 may be any one selected from the group consisting of:

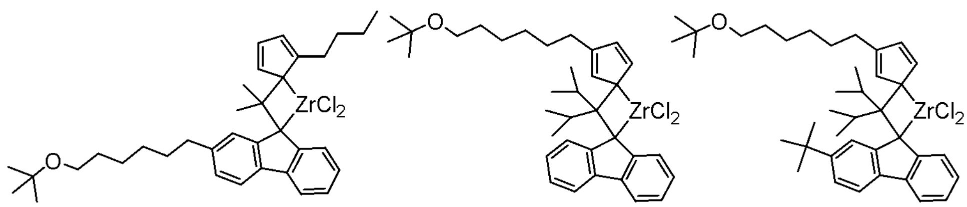

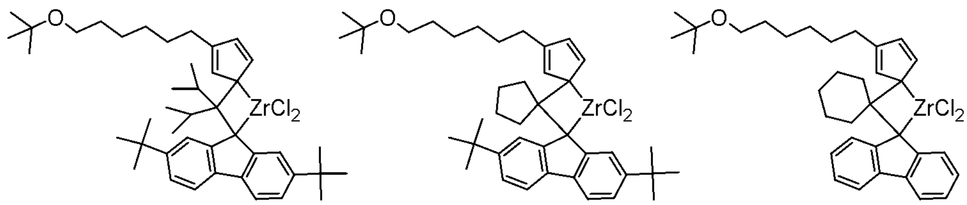

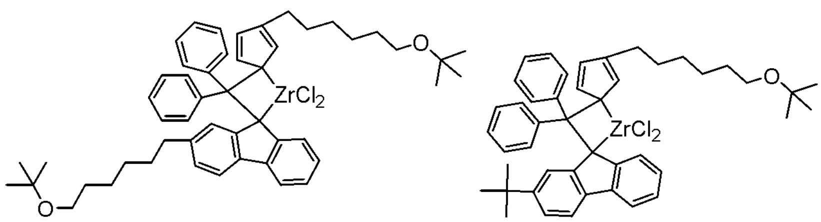

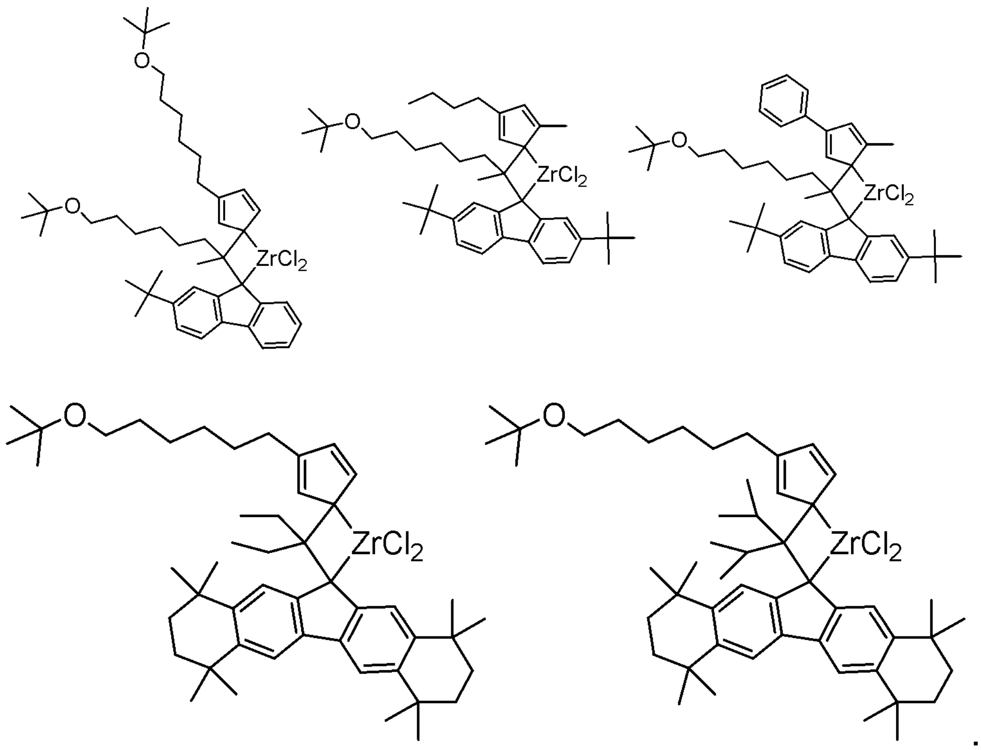

Meanwhile, the method for preparing the second metallocene compound represented by Chemical Formula 2 is not particularly limited, but, as one example, the compound may be prepared by a method such as Reaction Scheme 2 below.

Although the compound represented by Chemical Formula 2 is difficult to synthesize due to the steric hindrance of the indenyl ligand, the compound of Chemical Formula 2 may be produced with high yield and high purity according to a method such as Reaction Scheme 2 below.

Accordingly, in one embodiment of the present disclosure, the compound represented by Chemical Formula 2 may be prepared by a preparation method comprising:

a step of preparing a compound represented by Chemical Formula 2-3 by reacting a compound represented by Chemical Formula 2-1 with a compound represented by Chemical Formula 2-2;
a step of preparing a ligand of Chemical Formula 2-5 by reacting the compound represented by Chemical Formula 2-3 with a compound represented by Chemical Formula 2-4; and
a step of reacting the ligand of Chemical Formula 2-5 with a halogen salt of a transition metal represented by Chemical Formula 2-6:

[Reaction Scheme 2]

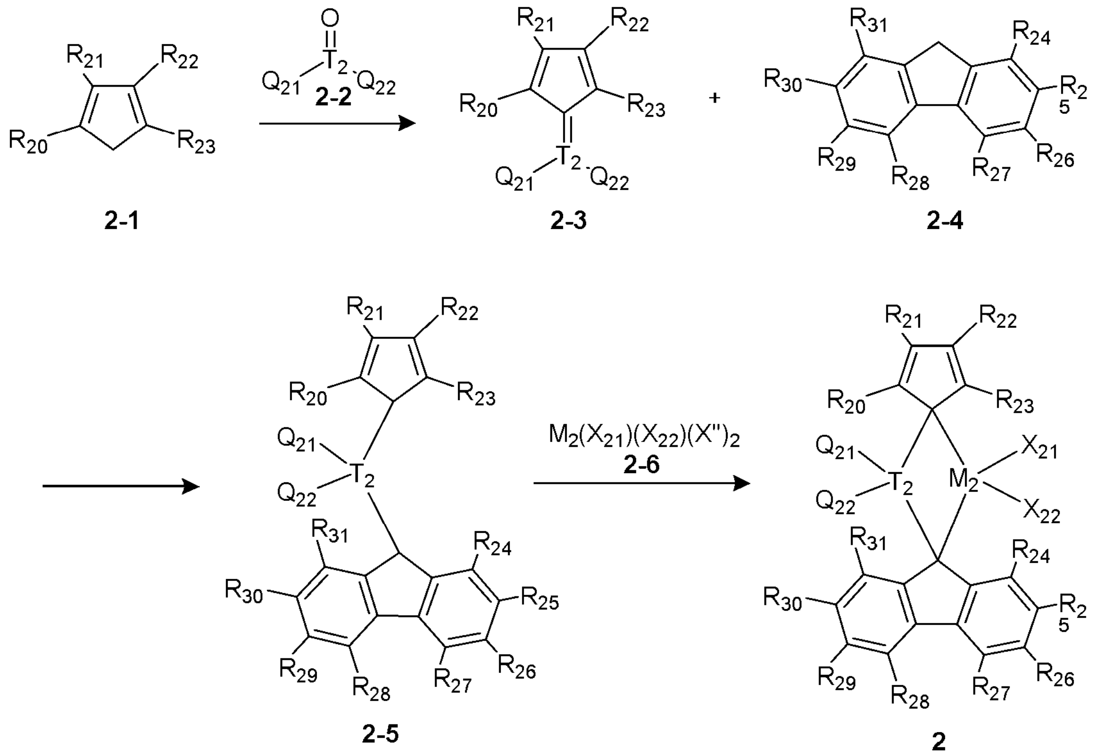


2-1 2-3 2-4

2-5 2

In Reaction Scheme 2,

$M_2$, $X_{21}$, $X_{22}$, $T_2$, $Q_{21}$, $Q_{22}$ and $R_{20}$ to $R_{31}$ are as defined in Chemical Formula 2, and
X" is each independently halogen.

In the hybrid supported metallocene catalyst of the present disclosure, the first metallocene compound and the second metallocene compound may be supported at a molar ratio of 1:1 to 25:1, 2:1 to 25:1, 3:1 to 25:1, 3:1 to 23:1, or 3:1 to 20:1. When the ratio of the first metallocene compound to the second metallocene compound is less than 1:1, the high-crystalline content becomes low, making it difficult for a stretched film to have heat resistance. When the ratio of the first metallocene compound to the second metallocene compound exceeds 25:1, the low-crystalline content becomes low, making biaxial stretching processability difficult.

In the hybrid supported metallocene catalyst of the present disclosure, a support containing a hydroxyl group on the surface may be used as a support for supporting the first metallocene compound and the second metallocene compound. Preferably, as the support, a material having highly reactive groups such as hydroxyl groups, silanol groups, or siloxane groups on its surface may be used. For this purpose, the surface may be modified by calcination or dried to remove moisture from the surface.

For example, silica prepared by calcining silica gel, silica dried at high temperature, silica-alumina, or silica-magnesia may be used. These supports may typically contain components such as oxides, carbonates, sulfates, and nitrates, including $Na_2O$, $K_2CO_3$, $BaSO_4$, and $Mg(NO_3)_2$.

When used in the form of a supported catalyst, the resulting polymer exhibits excellent particle morphology and bulk density, making it suitable for conventional slurry, bulk, or gas-phase polymerization processes. Among various supports, silica is particularly advantageous because the functional groups of the transition metal compounds are chemically bonded and supported thereon. As a result, catalyst leaching from the support surface during the ethylene polymerization process is minimal, thereby reducing fouling caused by polymer adhesion to the reactor walls or agglomeration between polymer particles in slurry or gas-phase polymerization.

The support may have an average particle size (D50) of 20 to 60 μm. When having the particle size described above, transition metal compounds may be supported with higher efficiency, and as a result, catalyst activity can be increased. More specifically, it can be 20 μm or more, or 25 μm or more, and 60 μm or less, or 50 μm or less.

In the present disclosure, the average particle diameter (D50) of the support is a particle diameter at the 50% point of cumulative distribution of the number of particles according to particle size (diameter). The D50 may be measured using a laser diffraction method. Specifically, the support to be measured is dispersed in the dispersion medium such as

deionized water and introduced into a commercially available particle size measuring device (e.g., Microtrac S3500). Then, a particle size distribution is obtained by measuring a difference in diffraction patterns according to particle size when the particles pass through the laser beam. In the measuring device, the average particle diameter is obtained by calculating a particle diameter at a point of reaching 50% of cumulative distribution of the number of particles according to particle diameter.

In addition, when supported on the support, the first and second metallocene compounds may each be supported in an amount of, for example, 1 mmol or more, 10 mmol or more, 15 mmol or more, 20 mmol or more, 25 mmol or more, or 30 mmol or more, and 500 mmol or less, 400 mmol or less, 300 mmol or less, 200 mmol or less, 100 mmol or less, 80 mmol or less, 60 mmol or less, or 52.5 mmol or less, per 1,000 g of the support. When supported within this range, the catalyst can exhibit appropriate catalytic activity, which may be advantageous in terms of maintaining catalyst performance and cost efficiency.

In addition, the hybrid metallocene catalyst may further include a cocatalyst so that it exhibits high activity and improves process stability.

Specifically, the cocatalyst may include one or more compounds represented by Chemical Formula 3 below.

[Chemical Formula 3] $-[Al(R_{41})-O]a-$

In Chemical Formula 3,

$R_{41}$ is halogen; or halogen-substituted or unsubstituted $C_{1-20}$ hydrocarbyl; and
a is an integer of 2 or more.

Meanwhile, in this disclosure, the hydrocarbyl group refers to a monovalent functional group derived from a hydrocarbon by the removal of one hydrogen atom, and may include an alkyl group, an alkenyl group, an alkynyl group, an aryl group, an aralkyl group, an aralkenyl group, an aralkynyl group, an alkylaryl group, an alkenylaryl group, and an alkynylaryl group, etc. Further, a $C_{1-20}$ hydrocarbyl group may be a $C_{1-15}$ or $C_{1-10}$ hydrocarbyl group. Specifically, a $C_{1-20}$ hydrocarbyl group may be a linear, branched or cyclic alkyl group such as a methyl group, an ethyl group, an n-propyl group, an iso-propyl group, an n-butyl group, an iso-butyl group, a tert-butyl group, an n-pentyl group, an n-hexyl group, an n-heptyl group, or a cyclohexyl group; or an aryl group such as a phenyl group, a naphthyl group, or an anthracenyl group.

Examples of the compound represented by Chemical Formula 3 may include alkyl aluminoxane-based compounds such as methylaluminoxane, ethylaluminoxane, isobutylaluminoxane, or butylaluminoxane, and any one or a mixture of two or more thereof may be used.

Among the above compounds, the cocatalyst may more specifically be an alkyl aluminoxane-based cocatalyst such as methylaluminoxane.

The alkyl aluminoxane-based cocatalyst can further enhance catalyst activity by stabilizing the first and second metallocene compounds and acting as a Lewis acid, as it includes a metal element capable of forming a bond with a functional group introduced into the bridge group of the first and second metallocene compounds through Lewis acid-base interaction.

In addition, the amount of the cocatalyst used may be appropriately adjusted depending on the desired effect of the catalyst and the physical properties of the resulting polyethylene. For example, when silica is used as the support, the cocatalyst may be supported in an amount of 100 g or more, 1000 g or more, or 2000 g or more, and 6000 g or less, 5500 g or less, or 5400 g or less, based on 1,000 g of silica.

The hybrid supported metallocene catalyst having the above-described configuration according to the present disclosure may be prepared by a method including: a step of supporting a cocatalyst compound on a support, and a step of supporting the first and second transition metal compounds on the support. The order of supporting the cocatalyst and the first and second transition metal compounds may be varied as needed, and the order of supporting the first and second transition metal compounds may also be changed. Alternatively, the first and second transition metal compounds may also be supported simultaneously. Considering the effects of the structure formed depending on the order of supporting, it is particularly advantageous to first support the cocatalyst on a support, followed by sequentially supporting the first and second transition metal compounds. This approach can provide a supported catalyst exhibiting high catalytic activity and improved process stability during polyethylene production.

As described above, the hybrid supported metallocene catalyst according to the present disclosure may exhibit excellent catalytic activity by including the first and second metallocene compounds having specific structures. Accordingly, the hybrid supported metallocene catalyst can be suitably used for the polymerization of ethylene and olefin-based monomers.

Meanwhile, as the olefin-based monomer to be copolymerized with ethylene, ethylene, an alpha-olefin, a cyclic olefin, a diene olefin having two or more double bonds, or a triene olefin may be used.

Specific examples of the olefin-based monomer include ethylene, propylene, 1-butene, 1-pentene, 4-methyl-1-pentene, 1-hexene, 1-heptene, 1-octene, 1-decene, 1-undecene, 1-dodecene, 1-tetradecene, 1-hexadecene, 1-eicosene, norbornene, norbornadiene, ethylidenenorbornene, phenylnorbornene, vinylnorbornene, dicyclopentadiene, 1,4-butadiene, 1,5-pentadiene, 1,6-hexadiene, styrene, α-methylstyrene, divinylbenzene, 3-chloromethylstyrene, and the like, and two or more of these monomers may be mixed and copolymerized. More specifically, the olefin-based monomer may be 1-hexene.

The amount of the olefin-based monomer to be introduced may be determined based on the desired physical properties of the resulting polyethylene. For example, in consideration of the intended physical properties of the polyethylene, the olefin-based monomer may be introduced in an amount of 3.0 to 10.0 wt% based on the total weight of ethylene.

The polymerization reaction is performed while introducing hydrogen.

Specifically, hydrogen may be introduced in an amount of 5 to 120 ppm based on the total weight of ethylene as the monomer. More specifically, the hydrogen may be introduced in an amount of 5 ppm or more, 10 ppm or more, 15 ppm or more, 20 ppm or more, or 21 ppm or more, and 100 ppm or less, 95 ppm or less, 90 ppm or less, 85 ppm or less, or 80 ppm or less based on the total weight of ethylene.

Introducing hydrogen within this range may facilitate achieving the desired physical properties of the resulting polyethylene.

The polymerization reaction may be performed as a gas-phase polymerization reaction or a slurry polymerization.

Accordingly, the polymerization may be performed using a single gas-phase polymerization reactor, a single continuous slurry polymerization reactor or a loop slurry reactor.

In addition, the hybrid supported catalyst may be dissolved or diluted in an aliphatic hydrocarbon solvent having 4 to 12 carbon atoms such as isobutane, pentane, hexane, heptane, nonane, decane, and their isomers, in an aromatic hydrocarbon solvent such as toluene or benzene, or in a chlorinated hydrocarbon solvent such as dichloromethane or chlorobenzene, and then injected. It is preferable to use the solvent after removing trace amounts of water or air that may act as catalyst poisons by treating with a small amount of alkyl aluminum, and the use of an additional cocatalyst is also possible.

The polymerization reaction may be performed at a temperature of 40°C or higher, 60°C or higher, or 80°C or higher, and 110°C or lower, 100°C or lower, or 90°C or lower. Moreover, when the pressure is controlled during the polymerization, the reaction may be performed under a pressure of 5 bar or more, 10 bar or more, or 20 bar or more, and 50 bar or less, 45 bar or less, or 40 bar or less. Performing the polymerization under these temperature and pressure conditions may facilitate the attainment of the desired physical properties of the polyethylene.

The polyethylene copolymer of the present disclosure is produced using a hybrid supported metallocene catalyst including a metallocene compound capable of imparting high molecular weight and high crystallinity and a metallocene compound capable of imparting low molecular weight and low crystallinity, thereby having a high crystalline content of 45 wt% or more and an enhanced backbone weight-average molecular weight of the high-crystalline fraction. Accordingly, when a biaxially oriented film is produced from the polyethylene copolymer, heat resistance such as tensile modulus and shrinkage of the oriented film can be improved.

Accordingly, the present disclosure provides a biaxially oriented film including the polyethylene copolymer; or a biaxially oriented film containing a composition including the polyethylene copolymer.

The present disclosure also provides a biaxially oriented film produced using the polyethylene copolymer or the composition.

The biaxially oriented film according to the present disclosure may be manufactured according to a conventional film manufacturing method, except that the polyethylene copolymer is used.

For example, the biaxially oriented film according to the present disclosure may be prepared under the stretching conditions described below, and more specific film manufacturing methods and conditions are as described in Examples 3 to 5 hereinafter.

- A polyethylene copolymer sheet having a thickness of 0.75 mm is prepared using a lab extruder line of Bruckner Co. (L/D ratio: 42, screw diameter: 25 mm, melt/T-die temperature: 220 °C).
- Biaxial orientation of the polyethylene copolymer sheet having a size of 50 mm × 50 mm is performed using a COAD.521 stretching apparatus of Ocean Science Co.
- After preheating for 90 seconds at 120 to 127 °C each, sequential stretching (MD → TD) is carried out.

In addition, the biaxially oriented polyethylene film according to the present disclosure may further include additives well known in the art, in addition to the above-described polyethylene copolymer. Specifically, such additives may include solvents, heat stabilizers, antioxidants, UV absorbers, light stabilizers, metal deactivators, fillers, reinforcing agents, plasticizers, lubricants, emulsifiers, pigments, optical brighteners, flame retardants, antistatic agents, and foaming agents. The types of the additives are not particularly limited, and common additives known in the art may be used.

Further, since the biaxially oriented film includes the polyethylene copolymer, it may exhibit excellent heat

resistance and mechanical properties.

The biaxially oriented film may have an MD draw ratio of 4 or more and a TD draw ratio of 5 or more. Preferably, the oriented film may satisfy an MD draw ratio of 5 or more and a TD draw ratio of 5 or more.

The biaxially oriented film, under conditions satisfying an MD draw ratio of 4 or more and a TD draw ratio of 5 or more, may have an MD 1% modulus measured in accordance with ASTM D 882 of 360 MPa or more, 370 MPa or more, or 378 MPa or more, and 1000 MPa or less, and a TD 1% modulus of 400 MPa or more, 420 MPa or more, or 424 MPa or more, and 1000 MPa or less.

The biaxially oriented film, under conditions satisfying an MD draw ratio of 4 or more and a TD draw ratio of 5 or more, may have a sum of MD 1% modulus and TD 1% modulus measured in accordance with ASTM D 882 of 800 MPa or more. Preferably, the sum of the 1% moduli is 850 MPa or more, or 900 MPa or more, and 1500 MPa or less.

The biaxially oriented film, under conditions satisfying an MD draw ratio of 4 or more and a TD draw ratio of 5 or more, may have an MD tensile elongation at break measured in accordance with ASTM D 882 of 50% or more, 70% or more, 90% or more, or 91% or more, and 250% or less, 240% or less, or 233% or less, and a TD tensile elongation at break of 50% or more, 70% or more, 90% or more, or 93% or more, and 200% or less, 190% or less, 180% or less, or 178% or less.

The biaxially oriented film, under conditions satisfying an MD draw ratio of 4 or more and a TD draw ratio of 5 or more, may have a sum of MD tensile elongation at break and TD tensile elongation at break measured in accordance with ASTM D 882 of 100% or more, 150% or more, 170% or more, 180% or more, or 184% or more, and 400% or less, 380% or less, 370% or less, or 363% or less.

The biaxially oriented film, under conditions satisfying an MD draw ratio of 4 or more and a TD draw ratio of 5 or more, may have an MD tear strength measured in accordance with ASTM 1922 of 0.05 g/μm or more, 0.07 g/μm or more, 0.09 g/μm or more, 0.1 g/μm or more, 0.11 g/μm or more, 0.21 g/μm or more, 0.26 g/μm or more, or 0.29 g/μm or more, and 1 g/μm or less, 0.8 g/μm or less, 0.6 g/μm or less, or 0.52 g/μm or less, and a TD tear strength of 0.2 g/μm or more, 0.23 g/μm or more, or 0.25 g/μm or more, and 0.9 g/μm or less, 0.8 g/μm or less, or 0.78 g/μm or less.

The biaxially oriented film, under conditions satisfying an MD draw ratio of 4 or more and a TD draw ratio of 5 or more, may have a sum of MD tear strength and TD tear strength measured in accordance with ASTM 1922 of 0.3 g/μm or more, 0.4 g/μm or more, or 0.46 g/μm or more, and 1.0 g/μm or less, 0.9 g/μm or less, or 0.86 g/μm or less.

The biaxially oriented film, under conditions satisfying an MD draw ratio of 4 or more and a TD draw ratio of 5 or more, may have an MD shrinkage ratio of 3% or more or 4.9% or more, and 15% or less, 12% or less, or 10.1% or less, and a TD shrinkage ratio of 5% or more or 7.5% or more, and 15% or less, 13% or less, 10% or less, or 12.5% or less, wherein the shrinkage ratio refers to the change in length measured according to ASTM D 1204 after shrinkage for 7 minutes at 120 °C (shrinkage ratio (%); measured as "[1 - (length after shrinkage)/(length before shrinkage)] × 100").

The biaxially oriented film, under conditions satisfying an MD draw ratio of 4 or more and a TD draw ratio of 5 or more, may have a sum of MD shrinkage ratio and TD shrinkage ratio measured in accordance with ASTM 1922 of 25.0% or less. Preferably, the sum of the MD and TD shrinkage ratios is 10% or more, 12% or more, or 12.4% or more, and 24% or less, 23% or less, or 22.3% or less.

In the present disclosure, the physical properties of the biaxially oriented film may be evaluated according to the above-mentioned standards, and the specific methods are as described in Experimental Example 2 hereinafter.

[EFFECT OF THE INVENTION]

The polyethylene copolymer of the present disclosure can be produced in a single reactor by using a metallocene catalyst hybrid-supported with a metallocene compound capable of imparting high molecular weight and high crystallinity and a metallocene compound capable of imparting low molecular weight and low crystallinity, and has an excellent effect of enabling the production of a biaxially oriented film with improved heat resistance due to an enhanced backbone weight-average molecular weight of the high-crystalline fraction.

[BEST MODE FOR CARRYING OUT THE INVENTION]

Hereinafter, embodiments of the present disclosure will be described in more detail with reference to the following Examples. However, the following Examples are merely illustrative of the embodiments of the present disclosure, and the scope of the present disclosure is not limited by the following Examples.

**<Preparation of metallocene compounds>**

**Synthesis Example 1-1: Preparation of metallocene compound A1**

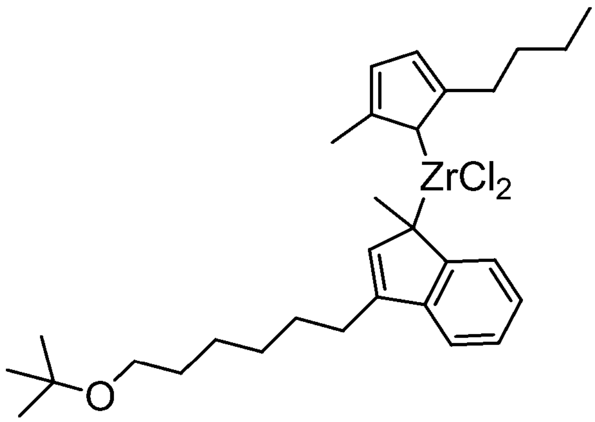

(1) Synthesis of Ligand

Under Ar atmosphere, 27.2 g (100 mmol) of 3-(6-*tert*-butoxyhexyl)-1*H*-indene and 250 mL of *n*-hexane were charged into a dried 2 L Schlenk flask. After cooling to -78 °C, 42 mL (1.05 eq., 105 mmol) of 2.5 M n-BuLi in hexane was added dropwise. The reaction mixture was slowly raised to room temperature and stirred for 8 hours. After cooling again to -78 °C, 21.3 g (1.5 eq., 150 mmol) of iodomethane was added dropwise. The mixture was slowly raised to room temperature and stirred for 24 hours, and then the organic layer was separated using water and diethyl ether. The organic layer was then dried with $MgSO_4$ to obtain 24.1 g (84.2 mmol, 84.2% yield) of 3-(6-*tert*-butoxyhexyl)-1-methyl-1*H*-indene.

$^1H$ NMR (500 MHz, $CDCl_3$): 1.12 (9H, s), 1.29 (3H, d), 1.42 (4H, m), 1.56 (2H, m), 1.70 (2H, m), 2.52 (2H, t), 3.34 (2H, t), 3.42 (1H, m), 6.25 (1H, brs), 7.21 (1H, t), 7.25-7.32 (2H, m), 7.40 (1H, d).

(2) Synthesis of metallocene compound

Under Ar atmosphere, 5.73 g (20 mmol) of the ligand synthesized above and 70 mL of diethyl ether were charged into a dried 250 mL Schlenk flask. After cooling to -78 °C, 8.4 mL (1.05 eq., 21 mmol) of 2.5 M n-BuLi in hexane was added dropwise. The reaction mixture was slowly raised to room temperature and stirred for 8 hours. After cooling again to -78 °C, 8.46 g (1.0 eq., 20 mmol) of (1-n-butyl-3-methylcyclopentadienyl)$ZrCl_3$ dimethoxyethane complex together with 30 mL of diethyl ether was charged. The mixture was slowly raised to room temperature and stirred for 24 hours, followed by drying under reduced pressure and charging with dichloromethane. The resulting suspension was filtered under Ar atmosphere to remove LiCl, and the filtrate was dried under reduced pressure, followed by charging with n-hexane. The resulting suspension was then filtered under Ar atmosphere to obtain 7.52 g (12.9 mmol, 64.5% yield) of the metallocene compound A1 in solid form.

$^1H$ NMR (500 MHz, $CDCl_3$): 0.77-0.81 (3H, m), 1.09 (9H, s), 1.16-1.28 (6H, m), 1.48-1.56 (6H, m), 1.95 (3H, d), 2.14 (1H, m), 2.42 (4H, m), 2.68 (1H, m), 2.90 (1H, m), 3.23 (2H, t), 4.97 (1H, dt), 5.11 (1H, dt), 5.76 (1H, t), 6.41 (1H, brs), 7.13-7.15 (2H, m), 7.46-7.48 (2H, m).

**Synthesis Example 1-2: Preparation of metallocene compound A2**

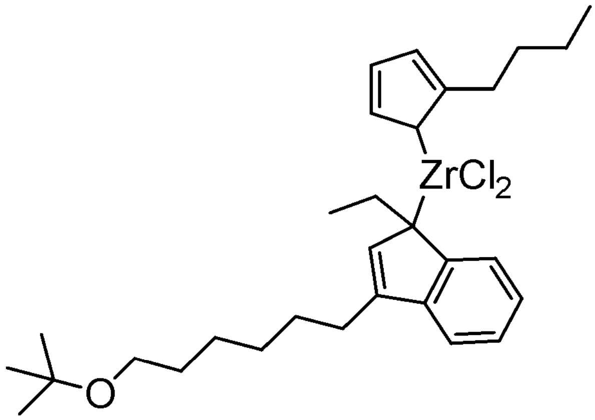

(1) Synthesis of Ligand

Under Ar atmosphere, 54.5 g (200 mmol) of 3-(6-*tert*-butoxyhexyl)-1*H*-indene and 500 mL of *n*-hexane were charged into a dried 2 L Schlenk flask. After cooling to -78 °C, 84 mL (1.05 eq., 210 mmol) of 2.5 M n-BuLi in hexane was added dropwise. The reaction mixture was slowly raised to room temperature and stirred for 8 hours. After cooling again to -78 °C, 46.8 g (1.5 eq., 300 mmol) of iodoethane was added dropwise. The mixture was slowly raised to room temperature and stirred for 24 hours, and then the organic layer was separated using water and diethyl ether. The organic layer was dried with $MgSO_4$ to obtain 43.3 g (144 mmol, 72% yield) of 3-(6-*tert*-butoxyhexyl)-1-ethyl-1*H*-indene.

$^1$H NMR (500 MHz, $CDCl_3$): 0.94 (3H, t), 1.12 (9H, s), 1.29 (2H, m), 1.32-1.90 (8H, m), 2.52 (2H, t), 3.34 (2H, t), 3.45 (1H, m), 6.27 (1H, brs), 7.22 (1H, t), 7.25-7.35 (2H, m), 7.39 (1H, d).

(2) Synthesis of metallocene compound

Under Ar atmosphere, 6.61 g (22 mmol) of the ligand synthesized above and 80 mL of diethyl ether were charged into a dried 250 mL Schlenk flask. After cooling to -78 °C, 9.3 mL (1.06 eq., 23.3 mmol) of 2.5 M n-BuLi in hexane was added dropwise. The reaction mixture was slowly raised to room temperature and stirred for 8 hours. After cooling again to -78 °C, 9.00 g (1.0 eq., 22 mmol) of (*n*-butylcyclopentadienyl)$ZrCl_3$ dimethoxyethane complex together with 30 mL of diethyl ether was charged. The mixture was slowly raised to room temperature and stirred for 24 hours, followed by drying under reduced pressure and charging with dichloromethane. The resulting suspension was filtered under Ar atmosphere to remove LiCl, and the filtrate was dried under reduced pressure, followed by charging with n-hexane. The resulting suspension was then filtered under Ar atmosphere to obtain 8.10 g (13.9 mmol, 63.2% yield) of the metallocene compound A2 in solid form.

$^1$H NMR (500 MHz, $CDCl_3$): 0.75-0.85 (3H, m), 0.87 (3H, m), 1.11 (9H, s), 1.18-1.29 (6H, m), 1.47-1.56 (6H, m), 2.16 (1H, m), 2.40-2.65 (4H, m), 2.89 (1H, m), 3.26 (2H, t), 4.96-5.94 (4H, m), 6.40 (1H, brs), 7.11-7.17 (2H, m), 7.44-7.48 (2H, m).

**Synthesis Example 1-3: Preparation of metallocene compound A3**

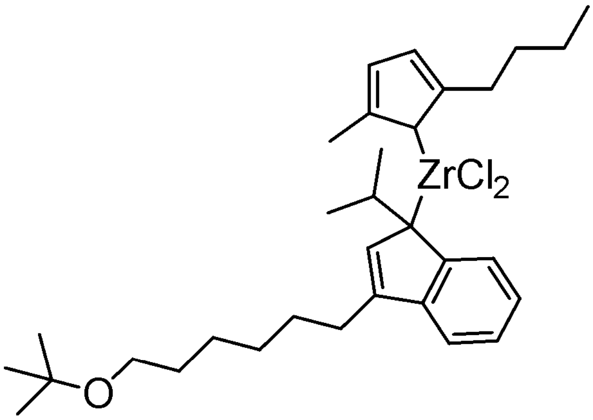

(1) Synthesis of Ligand

Under Ar atmosphere, 27.3 g (100 mmol) of 3-(6-*tert*-butoxyhexyl)-1*H*-indene and 250 mL of *n*-hexane were charged into a dried 2 L Schlenk flask. After cooling to -78 °C, 42 mL (1.05 eq., 105 mmol) of 2.5 M n-BuLi in hexane was added dropwise. The reaction mixture was slowly raised to room temperature and stirred for 8 hours. After cooling again to -78 °C, 13.6 g (1.1 eq., 111 mmol) of 2-bromopropane was added dropwise. The mixture was slowly raised to room temperature and stirred for 24 hours, and then the organic layer was separated using water and diethyl ether. The organic layer was dried with $MgSO_4$ to obtain 26.4 g (84 mmol, 84% yield) of 3-(6-*tert*-butoxyhexyl)-1-isopropyl-1*H*-indene.

$^1H$ NMR (500 MHz, $CDCl_3$): 0.88 (6H, d), 1.24 (9H, s), 1.34 (4H, m), 1.47 (3H, m), 1.57 (2H, m), 1.73 (2H, m), 2.55 (2H, t), 3.39 (2H, t), 3.45 (1H, m), 6.17 (1H, brs), 7.23 (1H, t), 7.31 (2H, m), 7.44 (1H, d).

(2) Synthesis of metallocene compound

Under Ar atmosphere, 6.29 g (20 mmol) of the ligand synthesized above and 70 mL of diethyl ether were charged into a dried 250 mL Schlenk flask. After cooling to -78 °C, 8.4 mL (1.05 eq., 21 mmol) of 2.5 M n-BuLi in hexane was added dropwise. The reaction mixture was slowly raised to room temperature and stirred for 8 hours. After cooling again to -78 °C, 8.46 g (1.0 eq., 20 mmol) of (1-*n*-butyl-3-methylcyclopentadienyl)$ZrCl_3$ dimethoxyethane complex together with 30 mL of diethyl ether was charged. The mixture was slowly raised to room temperature and stirred for 24 hours, followed by drying under reduced pressure and charging with dichloromethane. The resulting suspension was filtered under Ar atmosphere to remove LiCl, and the filtrate was dried under reduced pressure, followed by charging with n-hexane. The resulting suspension was then filtered under Ar atmosphere to obtain 7.70 g (12.6 mmol, 63% yield) of the metallocene compound A3 in solid form.

$^1H$ NMR (500 MHz, $CDCl_3$): 0.79-0.91 (9H, m), 1.19 (9H, s), 1.29-1.30 (6H, m), 1.52-1.54 (4H, m), 1.65-1.71 (2H, m), 2.03 (3H, s), 2.11-2.22 (2H, m), 2.51-2.55 (1H, m), 2.77-2.86 (1H, m), 2.99-3.07 (1H, m), 3.34 (2H, t), 4.53 (1H, dt), 5.22 (1H, dt), 5.82 (1H, t), 6.62 (1H, brs), 7.11-7.28 (2H, m), 7.56-7.63 (2H, m).

**Synthesis Example 1-4: Preparation of metallocene compound A4**

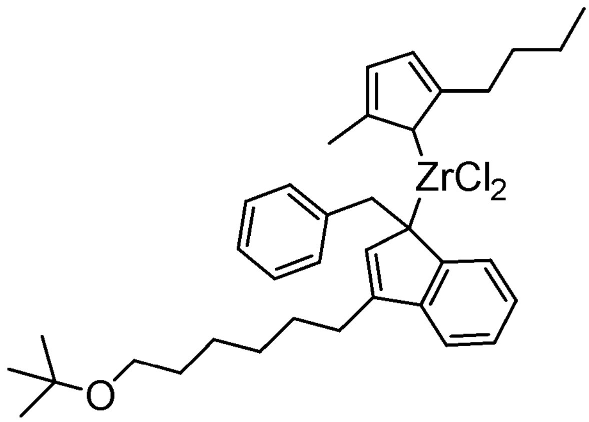

(1) Synthesis of Ligand

Under Ar atmosphere, 120 g (440 mmol) of 3-(6-*tert*-butoxyhexyl)-1*H*-indene and 1.1 L of *n*-hexane were charged into a dried 2 L Schlenk flask. After cooling to -78 °C, 185 mL (1.05 eq., 462.5 mmol) of 2.5 M n-BuLi in hexane was added dropwise. The reaction mixture was slowly raised to room temperature and stirred for 8 hours. After cooling again to -78 °C, 82.8 g (1.1 eq., 484 mmol) of benzyl bromide was added dropwise. The mixture was slowly raised to room temperature and stirred for 24 hours, and then the organic layer was separated using water and diethyl ether. The organic layer was dried with $MgSO_4$ to obtain 137 g (377 mmol, 85.7% yield) of 3-(6-*tert*-butoxyhexyl)-1-benzyl-1*H*-indene.

$^1$H NMR (500 MHz, $CDCl_3$): 1.22 (9H, s), 1.32 (4H, m), 1.44 (2H, m), 1.57 (2H, m), 1.73 (2H, m), 2.59 (2H, m), 3.38 (2H, t), 3.75 (1H, m), 6.14 (1H, brs), 7.14-7.45 (9H, m).

(2) Synthesis of metallocene compound

Under Ar atmosphere, 9.06 g (25 mmol) of the ligand synthesized above and 90 mL of diethyl ether were charged into a dried 250 mL Schlenk flask. After cooling to -78 °C, 11 mL (1.05 eq., 27.5 mmol) of 2.5 M n-BuLi in hexane was added dropwise. The reaction mixture was slowly raised to room temperature and stirred for 8 hours. After cooling again to -78 °C, 10.6 g (1.0 eq., 25 mmol) of (1-*n*-butyl-3-methylcyclopentadienyl)$ZrCl_3$ dimethoxyethane complex together with 30 mL of diethyl ether was charged. The mixture was slowly raised to room temperature and stirred for 24 hours, followed by drying under reduced pressure and charging with dichloromethane. The resulting suspension was filtered under Ar atmosphere to remove LiCl, and the filtrate was dried under reduced pressure, followed by charging with n-hexane. The resulting suspension was then filtered under Ar atmosphere to obtain 8.76 g (13.3 mmol, 53.2% yield) of the metallocene compound A4 in solid form.

$^1$H NMR (500 MHz, $CDCl_3$): 0.88-0.91 (3H, m), 1.22 (9H, s), 1.29-1.40 (8H, m), 1.52-1.76 (4H, m), 2.06 (3H, s), 2.11-2.22 (2H, m), 2.59-2.68 (2H, m), 2.99-3.07 (2H, m), 3.34 (2H, t), 4.43 (1H, dt), 5.21 (1H, dt), 5.78 (1H, t), 6.47 (1H, brs), 7.11-7.63 (9H, m).

**Synthesis Example 1-5: Preparation of metallocene compound A5**

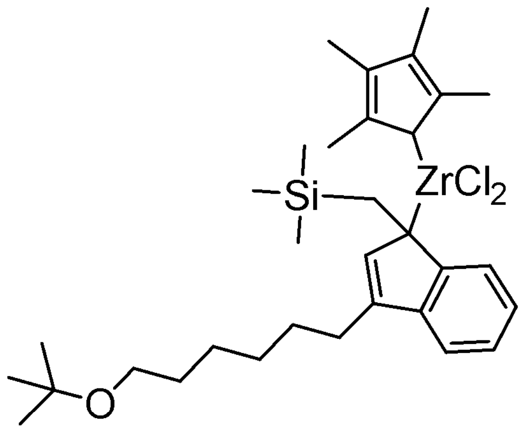

(1) Synthesis of Ligand

Under Ar atmosphere, 35.4 g (130 mmol) of 3-(6-*tert*-butoxyhexyl)-1*H*-indene and 350 mL of *n*-hexane were charged into a dried 2 L Schlenk flask. After cooling to -78 °C, 55 mL (1.05 eq., 137 mmol) of 2.5 M n-BuLi in hexane was added dropwise. The reaction mixture was slowly raised to room temperature and stirred for 8 hours. After cooling again to -78 °C, 23.9 g (1.5 eq., 195 mmol) of (chloromethyl)trimethylsilane was added dropwise. The mixture was slowly raised to room temperature and stirred for 24 hours, and then the organic layer was separated using water and diethyl ether. The organic layer was dried with $MgSO_4$ to obtain 27.6 g (77 mmol, 59.2% yield) of 3-(6-*tert*-butoxyhexyl)-1-(trimethylsilyl) methyl-1*H*-indene.

$^1H$ NMR (500 MHz, $CDCl_3$): 0.05 (9H, s), 0.88 (2H, m), 1.24 (9H, s), 1.33 (4H, m), 1.45 (2H, m), 1.57 (2H, m), 2.57 (2H, m), 3.35 (2H, t), 3.71 (1H, m), 6.16 (1H, brs), 7.12-7.45 (4H, m).

(2) Synthesis of metallocene compound

Under Ar atmosphere, 9.68 g (27 mmol) of the ligand synthesized above and 100 mL of diethyl ether were charged into a dried 250 mL Schlenk flask. After cooling to -78 °C, 11.4 mL (1.06 eq., 28.5 mmol) of 2.5 M n-BuLi in hexane was added dropwise. The reaction mixture was slowly raised to room temperature and stirred for 8 hours. After cooling again to -78 °C, 8.61 g (1.0 eq., 27 mmol) of (tetramethylcyclopentadienyl)$ZrCl_3$ together with 30 mL of diethyl ether was charged. The mixture was slowly raised to room temperature and stirred for 24 hours, followed by drying under reduced pressure and charging with dichloromethane. The resulting suspension was filtered under Ar atmosphere to remove LiCl, and the filtrate was dried under reduced pressure, followed by charging with *n*-hexane. The resulting suspension was then filtered under Ar atmosphere to obtain 8.76 g (13.3 mmol, 53.2% yield) of the metallocene compound A5 in solid form.

$^1H$ NMR (500 MHz, $CDCl_3$): -0.05 (9H, s), 0.75 (2H, m), 1.24 (9H, s), 1.25-1.42 (4H, m), 1.52-1.76 (4H, m), 1.81 (12H, brs), 2.10-2.22 (2H, m), 3.33 (2H, t), 5.01 (1H, brs), 6.41 (1H, brs), 7.10-7.58 (4H, m).

**Synthesis Example 1-6: Preparation of metallocene compound A6**

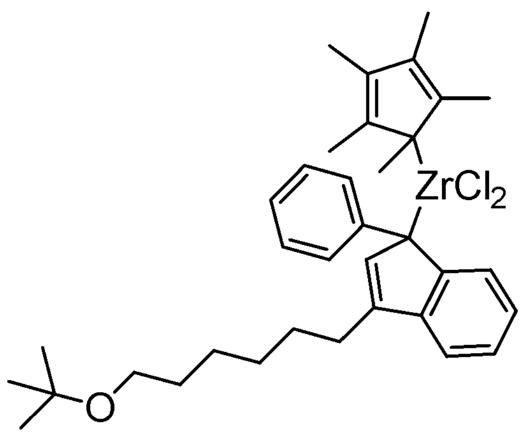

(1) Synthesis of Ligand

Under Ar atmosphere, 44.2 g (230 mmol) of 3-phenyl-1*H*-indene and 600 mL of tetrahydrofuran were charged into a dried 2 L Schlenk flask. After cooling to -78 °C, 97 mL (1.06 eq., 243 mmol) of 2.5 M n-BuLi in hexane was added dropwise. The reaction mixture was slowly raised to room temperature and stirred for 8 hours. After cooling again to -78 °C, 44.4 g (1.0 eq., 230 mmol) of 6-tert-butoxyhexyl chloride was added dropwise. The mixture was slowly raised to room temperature and stirred for 24 hours, and then the organic layer was separated using water and diethyl ether. The organic layer was dried with $MgSO_4$ to obtain 31.7 g (91.0 mmol, 39.5% yield) of 1-(6-*tert*-butoxyhexyl)-3-phenyl-1*H*-indene.

$^1H$ NMR (500 MHz, $CDCl_3$): 1.18 (9H, s), 1.32 (4H, m), 1.42 (2H, m), 1.55 (2H, m), 1.97 (2H, m), 3.32 (2H, t), 3.61 (1H, m), 6.66 (1H, brs), 7.08-7.50 (9H, m).

(2) Synthesis of metallocene compound

Under Ar atmosphere, 11.5 g (33 mmol) of the ligand synthesized above and 120 mL of diethyl ether were charged into a dried 250 mL Schlenk flask. After cooling to -78 °C, 13.9 mL (1.05 eq., 34.8 mmol) of 2.5 M n-BuLi in hexane was added dropwise. The reaction mixture was slowly raised to room temperature and stirred for 8 hours. After cooling again to -78 °C, 11.0 g (1.0 eq., 33 mmol) of (pentamethylcyclopentadienyl)$ZrCl_3$ together with 30 mL of diethyl ether was charged. The mixture was slowly raised to room temperature and stirred for 24 hours, followed by drying under reduced pressure and charging with dichloromethane. The resulting suspension was filtered under Ar atmosphere to remove LiCl, and the filtrate was dried under reduced pressure, followed by charging with *n*-hexane. The resulting suspension was then filtered under Ar atmosphere to obtain 15.3 g (23.7 mmol, 71.8% yield) of the metallocene compound A6 in solid form.

$^1H$ NMR (500 MHz, $CDCl_3$): 1.21 (9H, s), 1.26-1.43 (4H, m), 1.55-1.71 (4H, m), 1.74 (15H, brs), 2.24 (2H, m), 3.32 (2H, t), 6.61 (1H, brs), 7.10-7.65 (9H, m).

**Synthesis Example 1-7: Preparation of metallocene compound A7**

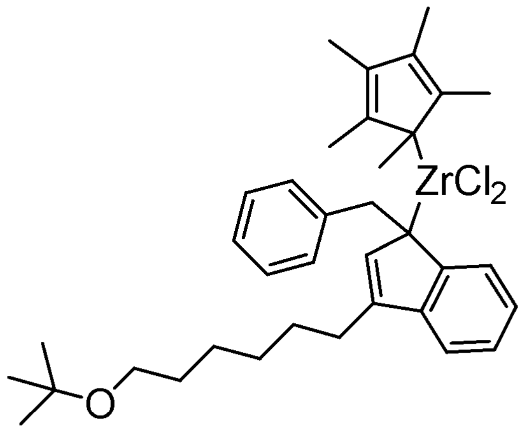

Under Ar atmosphere, 7.25 g (20 mmol) of the ligand synthesized in (1) of Synthesis Example 1-4 and 70 mL of diethyl ether were charged into a dried 250 mL Schlenk flask. After cooling to -78 °C, 8.4 mL (1.05 eq., 21 mmol) of 2.5 M n-BuLi in hexane was added dropwise. The reaction mixture was slowly raised to room temperature and stirred for 8 hours. After cooling again to -78 °C, 6.66 g (1.0 eq., 20 mmol) of (pentamethylcyclopentadienyl)$ZrCl_3$ together with 30 mL of diethyl ether was charged. The mixture was slowly raised to room temperature and stirred for 24 hours, followed by drying under reduced pressure and charging with dichloromethane. The resulting suspension was filtered under Ar atmosphere to remove LiCl, and the filtrate was dried under reduced pressure, followed by charging with n-hexane. The resulting suspension was then filtered under Ar atmosphere to obtain 7.45 g (11.3 mmol, 56.5% yield) of the metallocene compound A7 in solid form.

$^1H$ NMR (500 MHz, $CDCl_3$): 1.23 (9H, s), 1.25-1.41 (4H, m), 1.54-1.75 (4H, m), 1.79 (15H, brs), 2.21 (2H, m), 2.93 (2H, m), 3.32 (2H, t), 6.45 (1H, brs), 7.05-7.64 (9H, m).

**Synthesis Example 1-8: Preparation of metallocene compound A8**

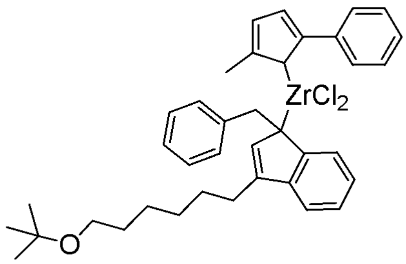

Under Ar atmosphere, 9.43 g (26 mmol) of the ligand synthesized in (1) of Synthesis Example 1-4 and 90 mL of diethyl ether were charged into a dried 250 mL Schlenk flask. After cooling to -78 °C, 11 mL (1.06 eq., 27.5 mmol) of 2.5 M n-BuLi in hexane was added dropwise. The reaction mixture was slowly raised to room temperature and stirred for 8 hours. After cooling again to -78 °C, 11.5 g (1.0 eq., 26 mmol) of (1-phenyl-3-methylcyclopentadienyl)$ZrCl_3$ dimethoxyethane complex together with 30 mL of diethyl ether was charged. The mixture was slowly raised to room temperature and stirred for 24 hours, followed by drying under reduced pressure and charging with dichloromethane. The resulting suspension was filtered under Ar atmosphere to remove LiCl, and the filtrate was dried under reduced pressure, followed by charging with n-hexane. The resulting suspension was then filtered under Ar atmosphere to obtain 10.9 g (16.1 mmol, 61.9% yield) of the metallocene compound A8 in solid form.

$^1H$ NMR (500 MHz, $CDCl_3$): 1.23 (9H, s), 1.25-1.41 (4H, m), 1.54-1.75 (4H, m), 2.17 (5H, m), 2.61 (2H, m), 3.32 (2H, t), 4.45 (1H, dt), 5.22 (1H, dt), 5.99 (1H, t), 6.45 (1H, brs), 7.09-7.58 (14H, m).

**Synthesis Example 1-9: Preparation of metallocene compound A9**

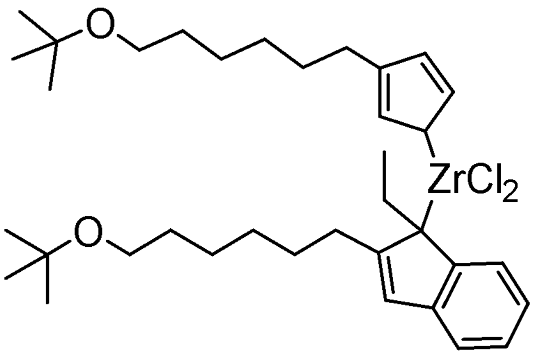

(1) Synthesis of Ligand

Under Ar atmosphere, 54.5 g (200 mmol) of 2-(6-*tert*-butoxyhexyl)-1*H*-indene and 500 mL of tetrahydrofuran were charged into a dried 2 L Schlenk flask. After cooling to -78 °C, 84 mL (1.05 eq., 210 mmol) of 2.5 M n-BuLi in hexane was added dropwise. The reaction mixture was slowly raised to room temperature and stirred for 8 hours. After cooling again to -78 °C, 46.8 g (1.5 eq., 300 mmol) of iodoethane was added dropwise. The mixture was slowly raised to room temperature and stirred for 24 hours, and then the organic layer was separated using water and diethyl ether. The organic layer was dried with $MgSO_4$ to obtain 41.2 g (137 mmol, 68.5% yield) of 2-(6-*tert*-butoxyhexyl)-1-ethyl-1*H*-indene.

$^1H$ NMR (500 MHz, $CDCl_3$): 0.96 (3H, t), 1.11 (9H, s), 1.22-1.90 (10H, m), 3.34 (3H, m), 6.46 (1H, brs), 7.12-7.55 (4H, m).

(2) Synthesis of metallocene compound

Under Ar atmosphere, 8.11 g (27 mmol) of the ligand synthesized above and 90 mL of diethyl ether were charged into a dried 250 mL Schlenk flask. After cooling to -78 °C, 11.4 mL (1.06 eq., 28.5 mmol) of 2.5 M n-BuLi in hexane was added dropwise. The reaction mixture was slowly raised to room temperature and stirred for 8 hours. After cooling again to -78 °C, 13.7 g (1.0 eq., 27 mmol) of ((6-*tert*-butoxyhexyl)cyclopentadienyl)$ZrCl_3$ dimethoxyethane complex together with 30 mL of diethyl ether was charged. The mixture was slowly raised to room temperature and stirred for 24 hours, followed by drying under reduced pressure and charging with dichloromethane. The resulting suspension was filtered under Ar atmosphere to remove LiCl, and the filtrate was dried under reduced pressure, followed by charging with n-hexane. The

resulting suspension was then filtered under Ar atmosphere to obtain 11.5 g (16.8 mmol, 62.2% yield) of the metallocene compound A9 in solid form.

$^1H$ NMR (500 MHz, $CDCl_3$): 0.88 (3H, m), 1.14 (18H, brs), 1.19-1.35 (8H, m), 1.51-1.70 (8H, m), 2.18 (1H, m), 2.40-2.65 (4H, m), 2.77 (1H, m), 3.25 (4H, m), 4.86-5.90 (4H, m), 6.66 (1H, brs), 7.07-7.21 (2H, m), 7.40-7.51 (2H, m).

**Synthesis Example 1-10: Preparation of metallocene compound A10**

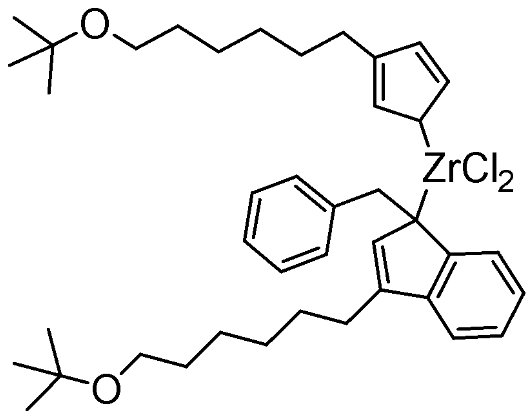

Under Ar atmosphere, 10.9 g (30 mmol) of the ligand synthesized in (1) of Synthesis Example 1-4 and 110 mL of diethyl ether were charged into a dried 250 mL Schlenk flask. After cooling to -78 °C, 12.6 mL (1.05 eq., 31.5 mmol) of 2.5 M n-BuLi in hexane was added dropwise. The reaction mixture was slowly raised to room temperature and stirred for 8 hours. After cooling again to -78 °C, 15.3 g (1.0 eq., 30 mmol) of ((6-*tert*-butoxyhexyl)cyclopentadienyl)$ZrCl_3$ dimethoxyethane complex together with 30 mL of diethyl ether was charged. The mixture was slowly raised to room temperature and stirred for 24 hours, followed by drying under reduced pressure and charging with dichloromethane. The resulting suspension was filtered under Ar atmosphere to remove LiCl, and the filtrate was dried under reduced pressure, followed by charging with *n*-hexane. The resulting suspension was then filtered under Ar atmosphere to obtain 13.3 g (17.8 mmol, 59.3% yield) of the metallocene compound A10 in solid form.

$^1H$ NMR (500 MHz, $CDCl_3$): 1.13 (18H, brs), 1.17-1.35 (8H, m), 1.52-1.66 (8H, m), 2.16 (1H, m), 2.40-2.65 (2H, m), 2.74 (1H, m), 2.98 (2H, m), 3.22 (4H, m), 4.89-5.88 (4H, m), 6.36 (1H, brs), 7.05-7.54 (9H, m).

**Synthesis Example 1-11: Preparation of metallocene compound A11**

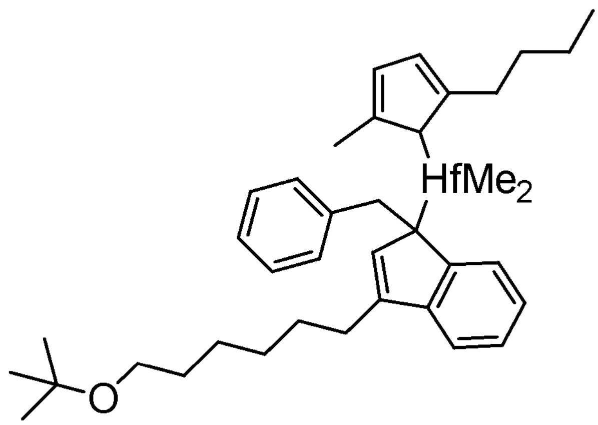

Under Ar atmosphere, 9.06 g (25 mmol) of the ligand synthesized in (1) of Synthesis Example 1-4 and 90 mL of diethyl ether were charged into a dried 250 mL Schlenk flask. After cooling to -78 °C, 11 mL (1.05 eq., 27.5 mmol) of 2.5 M n-BuLi in hexane was added dropwise. The reaction mixture was slowly raised to room temperature and stirred for 8 hours. After cooling again to -78 °C, 12.8 g (1.0 eq., 25 mmol) of (1-*n*-butyl-3-methylcyclopentadienyl)$HfCl_3$ dimethoxyethane

complex together with 30 mL of diethyl ether was charged. The mixture was slowly raised to room temperature and stirred for 24 hours, followed by drying under reduced pressure and charging with toluene. The resulting suspension was filtered under Ar atmosphere to remove LiCl, and 25 mL (3.0 eq., 75 mmol) of 3.0 M methylmagnesium bromide in diethyl ether was added dropwise to the filtrate. The reaction mixture was raised to 80 °C and stirred for 2 days. After cooling back to room temperature, 1,4-dioxane was added. The resulting suspension was filtered under Ar atmosphere to remove Mg salts, and the reaction mixture was dried under reduced pressure to obtain 12.9 g (18.3 mmol, 73.2% yield) of the metallocene compound A11 in the form of an oil.

$^1$H NMR (500 MHz, $CDCl_3$): -1.19 (6H, d), 0.85-0.88 (3H, m), 1.20 (9H, s), 1.22-1.37 (8H, m), 1.50-1.66 (4H, m), 2.01 (3H, s), 2.10-2.18 (2H, m), 2.52-2.58 (2H, m), 2.95-3.03 (2H, m), 3.32 (2H, t), 4.81 (1H, dt), 5.35 (1H, dt), 5.54 (1H, t), 5.71 (1H, brs), 7.05-7.53 (9H, m).

**Synthesis Example 1-12: Preparation of metallocene compound A12**

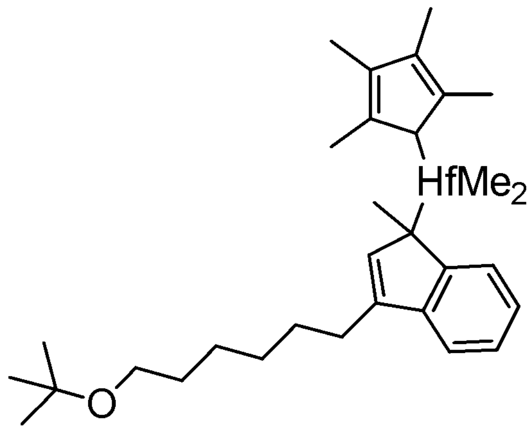

Under Ar atmosphere, 5.73 g (20 mmol) of the ligand synthesized in (1) of Synthesis Example 1-1 and 70 mL of diethyl ether were charged into a dried 250 mL Schlenk flask. After cooling to -78 °C, 8.4 mL (1.05 eq., 21 mmol) of 2.5 M n-BuLi in hexane was added dropwise. The reaction mixture was slowly raised to room temperature and stirred for 8 hours. After cooling again to -78 °C, 8.12 g (1.0 eq., 20 mmol) of (tetramethylcyclopentadienyl)$HfCl_3$ together with 30 mL of diethyl ether was charged. The mixture was slowly raised to room temperature and stirred for 24 hours, followed by drying under reduced pressure and charging with toluene. The resulting suspension was filtered under Ar atmosphere to remove LiCl, and 20 mL (3.0 eq., 60 mmol) of 3.0 M methylmagnesium bromide in diethyl ether was added dropwise to the filtrate. The reaction mixture was raised to 80 °C and stirred for 2 days. After cooling back to room temperature, 1,4-dioxane was added. The resulting suspension was filtered under Ar atmosphere to remove Mg salts, and the reaction mixture was dried under reduced pressure to obtain 7.80 g (12.7 mmol, 63.4% yield) of the metallocene compound A12 in the form of an oil.

$^1$H NMR (500 MHz, $CDCl_3$): -1.39 (6H, d), 1.17 (9H, s), 1.30-1.37 (4H, m), 1.45-1.70 (4H, m), 1.81-1.90 (12H, m), 2.27 (3H, s), 2.30-2.41 (1H, m), 2.72-2.80 (1H, m), 3.30 (2H, t), 4.92 (1H, brs), 5.56 (1H, brs), 7.10-7.19 (2H, m), 7.39-7.46 (2H, m).

**Synthesis Example 1-13: Preparation of metallocene compound A13**

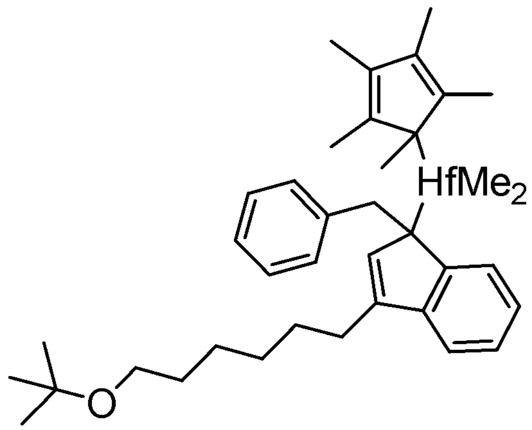

Under Ar atmosphere, 9.06 g (25 mmol) of the ligand synthesized in (1) of Synthesis Example 1-4 and 90 mL of diethyl ether were charged into a dried 250 mL Schlenk flask. After cooling to -78 °C, 11 mL (1.05 eq., 27.5 mmol) of 2.5 M n-BuLi in hexane was added dropwise. The reaction mixture was slowly raised to room temperature and stirred for 8 hours. After cooling again to -78 °C, 10.5 g (1.0 eq., 25 mmol) of (pentamethylcyclopentadienyl)$HfCl_3$ together with 30 mL of diethyl ether was charged. The mixture was slowly raised to room temperature and stirred for 24 hours, followed by drying under reduced pressure and charging with toluene. The resulting suspension was filtered under Ar atmosphere to remove LiCl, and 25 mL (3.0 eq., 75 mmol) of 3.0 M methylmagnesium bromide in diethyl ether was added dropwise to the filtrate. The reaction mixture was raised to 80 °C and stirred for 2 days. After cooling back to room temperature, 1,4-dioxane was added. The resulting suspension was filtered under Ar atmosphere to remove Mg salts, and the reaction mixture was dried under reduced pressure to obtain 9.45 g (13.4 mmol, 53.7% yield) of the metallocene compound A13 in the form of an oil.

$^1H$ NMR (500 MHz, $CDCl_3$): -1.25 (6H, d), 1.19 (9H, s), 1.22-1.37 (4H, m), 1.50-1.66 (4H, m), 1.85-2.05 (15H, m), 2.28 (1H, m), 2.78 (1H, m), 2.92-3.01 (2H, m), 3.32 (2H, t), 5.69 (1H, brs), 7.05-7.53 (9H, m).

**Synthesis Example 2-1: Preparation of metallocene compound B1**

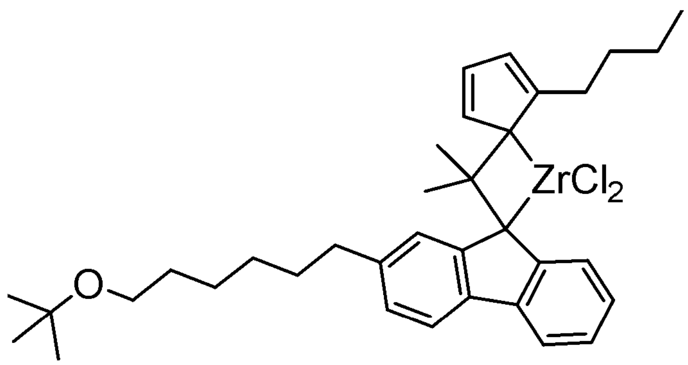

(1) Synthesis of Ligand

Under Ar atmosphere, 7.33 g (60 mmol) of n-butylcyclopentadiene, 6.97 g (2.0 eq., 120 mmol) of acetone, and 120 mL of methanol were charged into a dried 250 mL Schlenk flask. After cooling to 0 °C, 6.40 g (1.5 eq., 90 mmol) of pyrrolidine was added dropwise. The reaction mixture was slowly raised to room temperature and stirred for 24 hours. The reaction mixture was then cooled to 0 °C, followed by the addition of 120 mL of 10 vol% aqueous acetic acid, and stirred for 30 minutes. The organic layer was separated using water and diethyl ether, and dried with $MgSO_4$ to obtain 9.17 g (56.5 mmol, 94.1% yield) of 2-n-butyl-5-isopropylidene-cyclopenta-1,3-diene.

Under Ar atmosphere, 12.9 g (40 mmol) of 2-(6-tert-butoxyhexyl)fluorene and 160 mL of tetrahydrofuran were charged into another dried 250 mL Schlenk flask. After cooling to -78 °C, 19.2 mL (1.2 eq., 48 mmol) of 2.5 M n-BuLi in hexane was added dropwise. The reaction mixture was slowly raised to room temperature and stirred for 8 hours. After cooling again to -78 °C, 6.49 g (1.0 eq., 40 mmol) of the above-synthesized 2-n-butyl-5-isopropylidene-cyclopenta-1,3-diene together with 30 mL of tetrahydrofuran was charged. The mixture was slowly raised to room temperature and stirred

for 24 hours, and then the organic layer was separated using water and diethyl ether. The organic layer was dried with $MgSO_4$ to obtain 17.8 g (36.7 mmol, 91.8% yield) of the ligand.

$^1H$ NMR (500 MHz, $CDCl_3$): 0.91-0.97 (9H, m), 1.12 (9H, s), 1.25-1.62 (12H, m), 2.15 (2H, m), 2.68 (2H, m), 2.92 (4H, m), 3.36 (2H, t), 3.73 (1H, brs), 6.13 (1H, m), 6.28 (1H, brs), 7.21-8.01 (7H, m).

(2) Synthesis of metallocene compound

Under Ar atmosphere, 14.5 g (30 mmol) of the ligand synthesized above, 30 mL of methyl t-butyl ether, and 120 mL of toluene were charged into a dried 250 mL Schlenk flask. After cooling to -78 °C, 26.4 mL (2.2 eq., 66 mmol) of 2.5 M n-BuLi in hexane was added dropwise. The reaction mixture was slowly raised to room temperature and stirred for 8 hours. After cooling again to -78 °C, 11.3 g (1.0 eq., 30 mmol) of $ZrCl_4(THF)_2$ together with 10 mL of methyl t-butyl ether was charged. The mixture was slowly raised to room temperature and stirred for 24 hours, followed by drying under reduced pressure at room temperature to remove methyl t-butyl ether. The resulting toluene suspension was filtered under Ar atmosphere to remove LiCl, and the filtrate was dried under reduced pressure at 50 °C, followed by charging with n-hexane. The resulting suspension was then filtered under Ar atmosphere to obtain 8.25 g (12.8 mmol, 42.7% yield) of the metallocene compound B1 in solid form.

$^1H$ NMR (500 MHz, $C_6D_6$): 0.91-1.04 (9H, m), 1.13 (9H, s), 1.25-1.38 (6H, m), 1.44-1.65 (6H, m), 2.25 (2H, m), 2.85 (2H, m), 3.37 (2H, t), 5.42-6.21 (3H, m), 7.26-7.39 (3H, m), 7.42-7.55 (2H, m), 7.78 (1H, d), 7.93 (2H, d).

**Synthesis Example 2-2: Preparation of metallocene compound B2**

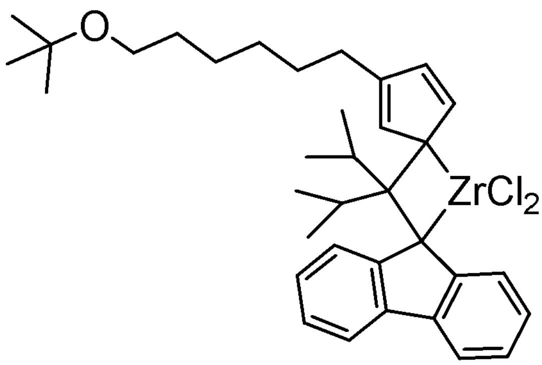

(1) Synthesis of Ligand

Under Ar atmosphere, 100 g (450 mmol) of 2-(6-*tert*-butoxyhexyl)cyclopentadiene, 103 g (2.0 eq., 900 mmol) of 2,4-dimethyl-3-pentanone, and 1 L of ethanol were charged into a dried 250 mL Schlenk flask. After cooling to 0 °C, 48.0 g (1.5 eq., 675 mmol) of pyrrolidine was added dropwise. The reaction mixture was slowly raised to room temperature and stirred for 24 hours. The reaction mixture was then cooled to 0 °C, followed by the addition of 1 L of 10 vol% aqueous acetic acid, and stirred for 30 minutes. The organic layer was separated using water and diethyl ether, and dried with $MgSO_4$ to obtain 44.9 g (141 mmol, 31.3% yield) of 2-(6-*tert*-butoxyhexyl)-5-(2,4-dimethylpentan-3-ylidene)-cyclopenta-1,3-diene.

Under Ar atmosphere, 1.66 g (10 mmol) of fluorene and 40 mL of tetrahydrofuran were charged into another dried 250 mL Schlenk flask. After cooling to -78 °C, 4.8 mL (1.2 eq., 12 mmol) of 2.5 M n-BuLi in hexane was added dropwise. The reaction mixture was slowly raised to room temperature and stirred for 8 hours. After cooling again to -78 °C, 3.19 g (1.0 eq., 10 mmol) of the above-synthesized 2-(6-*tert*-butoxyhexyl)-5-(2,4-dimethylpentan-3-ylidene)-cyclopenta-1,3-diene together with 10 mL of tetrahydrofuran was charged. The mixture was slowly raised to room temperature and stirred for 24 hours, and then the organic layer was separated using water and diethyl ether. The organic layer was dried with $MgSO_4$ to obtain 3.94 g (8.12 mmol, 81.2% yield) of the ligand.

$^1H$ NMR (500 MHz, $CDCl_3$): 0.87 (12H, d), 1.12 (9H, s), 1.34 (2H, m), 1.41 (2H, m), 1.46 (2H, m), 1.55 (4H, m), 2.18 (2H, t), 2.91 (2H, d), 3.36 (2H, t), 3.73 (1H, s), 6.15 (1H, t), 6.25 (1H, brs), 7.25-7.44 (4H, m), 7.55 (2H, dd), 7.90 (2H, dd).

(2) Synthesis of metallocene compound

Under Ar atmosphere, 3.94 g (8.12 mmol) of the ligand synthesized above, 5 mL of methyl *t*-butyl ether, and 20 mL

of toluene were charged into a dried 250 mL Schlenk flask. After cooling to -78 °C, 7.1 mL (2.2 eq., 17.8 mmol) of 2.5 M n-BuLi in hexane was added dropwise. The reaction mixture was slowly raised to room temperature and stirred for 8 hours. After cooling again to -78 °C, 3.06 g (1.0 eq., 8.12 mmol) of $ZrCl_4(THF)_2$ together with 5 mL of methyl *t*-butyl ether was charged. The mixture was slowly raised to room temperature and stirred for 24 hours, followed by drying under reduced pressure at room temperature to remove methyl t-butyl ether. The resulting toluene suspension was filtered under Ar atmosphere to remove LiCl, and the filtrate was dried under reduced pressure at 50 °C, followed by charging with n-hexane. The resulting suspension was then filtered under Ar atmosphere to obtain 2.61 g (4.04 mmol, 49.8% yield) of the metallocene compound B2 in solid form.

$^1H$ NMR (500 MHz, $C_6D_6$): $^1H$ NMR (500 MHz, $C_6D_6$): 0.91 (12H, d), 1.13 (9H, s), 1.15-1.38 (6H, m), 1.40-1.55 (6H, m), 3.22 (2H, t), 5.32-6.12 (3H, m), 7.20-7.32 (2H, t), 7.47-7.55 (2H, dd), 7.72 (2H, d), 7.93 (2H, t).

**Synthesis Example 2-3: Preparation of metallocene compound B3**

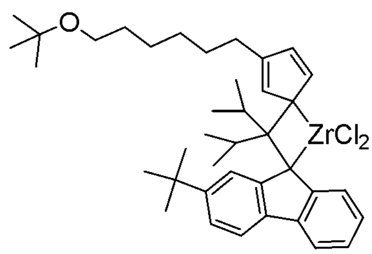

(1) Synthesis of Ligand

Under Ar atmosphere, 4.45 g (20 mmol) of 2-tert-butylfluorene and 80 mL of tetrahydrofuran were charged into another dried 250 mL Schlenk flask. After cooling to -78 °C, 9.6 mL (1.2 eq., 24 mmol) of 2.5 M n-BuLi in hexane was added dropwise. The reaction mixture was slowly raised to room temperature and stirred for 8 hours. After cooling again to -78 °C, 6.38 g (1.0 eq., 20 mmol) of the 2-(6-*tert*-butoxyhexyl)-5-(2,4-dimethylpentan-3-ylidene)-cyclopenta-1,3-diene obtained in B2 together with 10 mL of tetrahydrofuran was charged. The mixture was slowly raised to room temperature and stirred for 24 hours, and then the organic layer was separated using water and diethyl ether. The organic layer was dried with $MgSO_4$ to obtain 7.30 g (13.5 mmol, 67.5% yield) of the ligand.

$^1H$ NMR (500 MHz, $CDCl_3$): 0.85 (12H, d), 1.14 (9H, s), 1.25 (9H, s), 1.31-1.60 (10H, m), 2.22 (2H, m), 2.92 (2H, m), 3.33 (2H, t), 3.76 (1H, brs), 6.11 (1H, m), 6.35 (1H, brs), 7.25-7.42 (3H, m), 7.50-7.62 (2H, d), 7.81-7.92 (2H, d).

(2) Synthesis of metallocene compound

Under Ar atmosphere, 7.30 g (13.5 mmol) of the ligand synthesized above, 10 mL of methyl *t*-butyl ether, and 40 mL of toluene were charged into a dried 250 mL Schlenk flask. After cooling to -78 °C, 11.9 mL (2.2 eq., 29.8 mmol) of 2.5 M n-BuLi in hexane was added dropwise. The reaction mixture was slowly raised to room temperature and stirred for 8 hours. After cooling again to -78 °C, 5.09 g (1.0 eq., 13.5 mmol) of $ZrCl_4(THF)_2$ together with 10 mL of methyl *t*-butyl ether was charged. The mixture was slowly raised to room temperature and stirred for 24 hours, followed by drying under reduced pressure at room temperature to remove methyl *t*-butyl ether. The resulting toluene suspension was filtered under Ar atmosphere to remove LiCl, and the filtrate was dried under reduced pressure at 50 °C, followed by charging with n-hexane. The resulting suspension was then filtered under Ar atmosphere to obtain 5.31 g (7.57 mmol, 56.1% yield) of the metallocene compound B3 in solid form.

$^1H$ NMR (500 MHz, $C_6D_6$): 0.90 (12H, d), 1.12 (9H, s), 1.15-1.38 (15H, m), 1.44-1.55 (6H, m), 3.21 (2H, t), 5.30-6.15 (3H, m), 7.23-7.55 (5H, m), 7.73 (1H, d), 7.92 (1H, d).

**Synthesis Example 2-4: Preparation of metallocene compound B4**

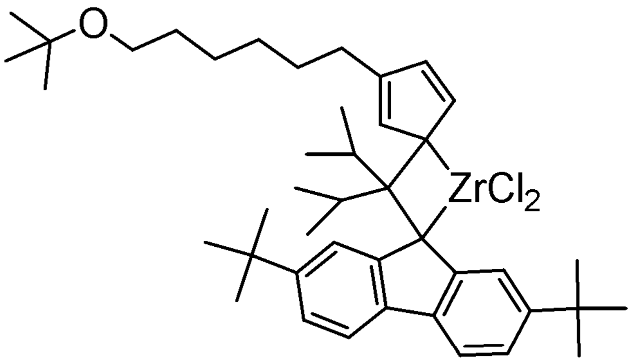

(1) Synthesis of Ligand

Under Ar atmosphere, 5.01 g (18 mmol) of 2,7-di-*tert*-butylfluorene and 80 mL of tetrahydrofuran were charged into another dried 250 mL Schlenk flask. After cooling to -78 °C, 8.6 mL (1.2 eq., 21.5 mmol) of 2.5 M n-BuLi in hexane was added dropwise. The reaction mixture was slowly raised to room temperature and stirred for 8 hours. After cooling again to -78 °C, 5.73 g (1.0 eq., 18 mmol) of the 2-(6-*tert*-butoxyhexyl)-5-(2,4-dimethylpentan-3-ylidene)-cyclopenta-1,3-diene obtained in B2 together with 10 mL of tetrahydrofuran was charged. The mixture was slowly raised to room temperature and stirred for 24 hours, and then the organic layer was separated using water and diethyl ether. The organic layer was dried with $MgSO_4$ to obtain 6.92 g (11.6 mmol, 64.4% yield) of the ligand.

$^1$H NMR (500 MHz, $CDCl_3$): 0.85 (12H, d), 1.14 (9H, s), 1.27 (18H, s), 1.31-1.60 (10H, m), 2.22 (2H, m), 2.92 (2H, m), 3.33 (2H, t), 3.76 (1H, brs), 6.11 (1H, m), 6.35 (1H, brs), 7.40 (2H, m), 7.49-7.62 (2H, m), 7.78-7.91 (2H, m).

(2) Synthesis of metallocene compound

Under Ar atmosphere, 6.92 g (11.6 mmol) of the ligand synthesized above, 10 mL of methyl *t*-butyl ether, and 40 mL of toluene were charged into a dried 250 mL Schlenk flask. After cooling to -78 °C, 10.2 mL (2.2 eq., 25.5 mmol) of 2.5 M n-BuLi in hexane was added dropwise. The reaction mixture was slowly raised to room temperature and stirred for 8 hours. After cooling again to -78 °C, 4.38 g (1.0 eq., 11.6 mmol) of $ZrCl_4(THF)_2$ together with 10 mL of methyl t-butyl ether was charged. The mixture was slowly raised to room temperature and stirred for 24 hours, followed by drying under reduced pressure at room temperature to remove methyl t-butyl ether. The resulting toluene suspension was filtered under Ar atmosphere to remove LiCl, and the filtrate was dried under reduced pressure at 50 °C, followed by charging with n-hexane. The resulting suspension was then filtered under Ar atmosphere to obtain 4.12 g (5.44 mmol, 46.9% yield) of the metallocene compound B4 in solid form.

$^1$H NMR (500 MHz, $C_6D_6$): 0.90 (12H, d), 1.12 (9H, s), 1.15-1.38 (24H, m), 1.44-1.55 (6H, m), 3.21 (2H, t), 5.30-6.15 (3H, m), 7.44 (2H, dd), 7.65 (2H, d), 7.91 (2H, d).

**Synthesis Example 2-5: Preparation of metallocene compound B5**

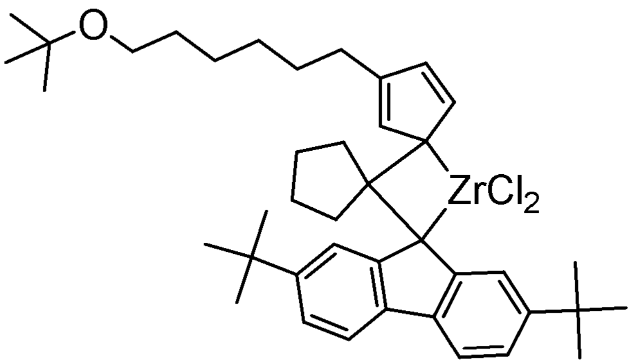

(1) Synthesis of Ligand

Under Ar atmosphere, 10.2 g (45.8 mmol) of 2-(6-*tert*-butoxyhexyl)cyclopentadiene, 7.71 g (2.0 eq., 91.6 mmol) of cyclopentanone, and 100 mL of methanol were charged into a dried 250 mL Schlenk flask. After cooling to 0 °C, 4.89 g (1.5 eq., 68.7 mmol) of pyrrolidine was added dropwise. The reaction mixture was slowly raised to room temperature and stirred for 24 hours. The reaction mixture was then cooled to 0 °C, followed by the addition of 100 mL of 10 vol% aqueous acetic acid, and stirred for 30 minutes. The organic layer was separated using water and diethyl ether, and dried with $MgSO_4$ to obtain 11.3 g (39.2 mmol, 85.6% yield) of 2-(6-*tert*-butoxyhexyl)-5-(cyclopentylidene)-cyclopenta-1,3-diene.

Under Ar atmosphere, 7.80 g (28 mmol) of 2,7-di-*tert*-butylfluorene and 100 mL of tetrahydrofuran were charged into another dried 250 mL Schlenk flask. After cooling to -78 °C, 13.4 mL (1.2 eq., 33.5 mmol) of 2.5 M n-BuLi in hexane was added dropwise. The reaction mixture was slowly raised to room temperature and stirred for 8 hours. After cooling again to -78 °C, 8.08 g (1.0 eq., 28 mmol) of the above-synthesized 2-(6-tert-butoxyhexyl)-5-(cyclopentylidene)-cyclopenta-1,3-diene together with 15 mL of tetrahydrofuran was charged. The mixture was slowly raised to room temperature and stirred for 24 hours, and then the organic layer was separated using water and diethyl ether. The organic layer was dried with $MgSO_4$ to obtain 11.8 g (20.8 mmol, 74.3% yield) of the ligand.

$^1H$ NMR (500 MHz, $CDCl_3$): 1.11 (9H, s), 1.25 (18H, s), 1.31-1.60 (14H, m), 1.64-1.88 (4H, m), 2.26 (2H, m), 2.94 (2H, m), 3.36 (2H, t), 3.74 (1H, brs), 6.12 (1H, m), 6.32 (1H, brs), 7.41 (2H, m), 7.47-7.62 (2H, m), 7.75-7.89 (2H, m).

(2) Synthesis of metallocene compound

Under Ar atmosphere, 11.8 g (20.8 mmol) of the ligand synthesized above, 20 mL of methyl t-butyl ether, and 80 mL of toluene were charged into a dried 250 mL Schlenk flask. After cooling to -78 °C, 18.3 mL (2.2 eq., 45.8 mmol) of 2.5 M n-BuLi in hexane was added dropwise. The reaction mixture was slowly raised to room temperature and stirred for 8 hours. After cooling again to -78 °C, 7.85 g (1.0 eq., 20.8 mmol) of $ZrCl_4(THF)_2$ together with 15 mL of methyl t-butyl ether was charged. The mixture was slowly raised to room temperature and stirred for 24 hours, followed by drying under reduced pressure at room temperature to remove methyl t-butyl ether. The resulting toluene suspension was filtered under Ar atmosphere to remove LiCl, and the filtrate was dried under reduced pressure at 50 °C, followed by charging with n-hexane. The resulting suspension was then filtered under Ar atmosphere to obtain 10.1 g (13.9 mmol, 66.8% yield) of the metallocene compound B5 in solid form.

$^1H$ NMR (500 MHz, $C_6D_6$): 1.12 (9H, s), 1.15-1.36 (26H, m), 1.44-1.55 (4H, m), 1.62-1.81 (4H, m), 3.31 (2H, t), 5.30-6.25 (3H, m), 7.42-7.51 (2H, dd), 7.68 (2H, d), 7.87 (2H, d).

**Synthesis Example 2-6: Preparation of metallocene compound B6**

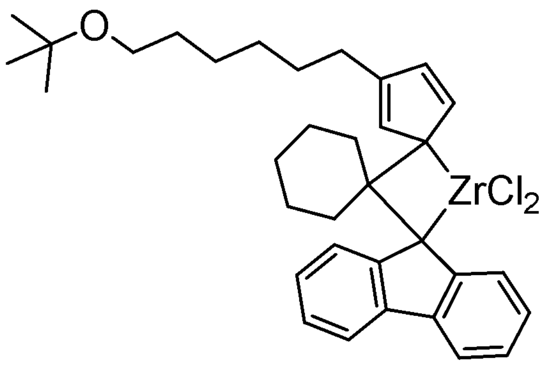

(1) Synthesis of Ligand

Under Ar atmosphere, 5.57 g (25 mmol) of *2-(6-tert*-butoxyhexyl)cyclopentadiene, 4.91 g (2.0 eq., 50 mmol) of cyclohexanone, and 50 mL of methanol were charged into a dried 250 mL Schlenk flask. After cooling to 0 °C, 2.67 g (1.5 eq., 37.5 mmol) of pyrrolidine was added dropwise. The reaction mixture was slowly raised to room temperature and stirred for 24 hours. The reaction mixture was then cooled to 0 °C, followed by the addition of 50 mL of 10 vol% aqueous acetic acid, and stirred for 30 minutes. The organic layer was separated using water and diethyl ether, and dried with $MgSO_4$ to obtain 5.54 g (18.3 mmol, 73.2% yield) of 2-(6-*tert*-butoxyhexyl)-5-(cyclohexylidene)-cyclopenta-1,3-diene.

Under Ar atmosphere, 2.49 g (15 mmol) of fluorene and 50 mL of tetrahydrofuran were charged into another dried

250 mL Schlenk flask. After cooling to -78 °C, 7.2 mL (1.2 eq., 18 mmol) of 2.5 M n-BuLi in hexane was added dropwise. The reaction mixture was slowly raised to room temperature and stirred for 8 hours. After cooling again to -78 °C, 4.54 g (1.0 eq., 15 mmol) of the above-synthesized 2-(6-*tert*-butoxyhexyl)-5-(cyclohexylidene)-cyclopenta-1,3-diene together with 10 mL of tetrahydrofuran was charged. The mixture was slowly raised to room temperature and stirred for 24 hours, and then the organic layer was separated using water and diethyl ether. The organic layer was dried with $MgSO_4$ to obtain 5.06 g (10.8 mmol, 72% yield) of the ligand.

$^1H$ NMR (500 MHz, $CDCl_3$): 1.22 (9H, s), 1.29-1.71 (16H, m), 1.81-1.91 (2H, t), 2.24-2.47 (2H, m), 2.63-2.93 (2H, m), 3.37 (2H, t), 3.94 (1H, brs), 5.66-6.17 (2H, m), 7.14-7.36 (6H, m), 7.65-7.77 (2H, m).

(2) Synthesis of metallocene compound

Under Ar atmosphere, 5.06 g (10.8 mmol) of the ligand synthesized above, 10 mL of methyl t-butyl ether, and 40 mL of toluene were charged into a dried 250 mL Schlenk flask. After cooling to -78 °C, 9.5 mL (2.2 eq., 23.8 mmol) of 2.5 M n-BuLi in hexane was added dropwise. The reaction mixture was slowly raised to room temperature and stirred for 8 hours. After cooling again to -78 °C, 4.07 g (1.0 eq., 10.8 mmol) of $ZrCl_4(THF)_2$ together with 10 mL of methyl *t*-butyl ether was charged. The mixture was slowly raised to room temperature and stirred for 24 hours, followed by drying under reduced pressure at room temperature to remove methyl t-butyl ether. The resulting toluene suspension was filtered under Ar atmosphere to remove LiCl, and the filtrate was dried under reduced pressure at 50 °C, followed by charging with n-hexane. The resulting suspension was then filtered under Ar atmosphere to obtain 4.15 g (6.60 mmol, 61.1% yield) of the metallocene compound B6 in solid form.

$^1H$ NMR (500 MHz, $C_6D_6$): 1.18 (9H, s), 1.20-1.64 (18H, m), 1.77-1.96 (2H, m), 3.30 (2H, t), 5.40-6.14 (3H, m), 7.25-7.61 (4H, m), 7.72 (2H, dd), 7.89 (2H, t).

**Synthesis Example 2-7: Preparation of metallocene compound B7**

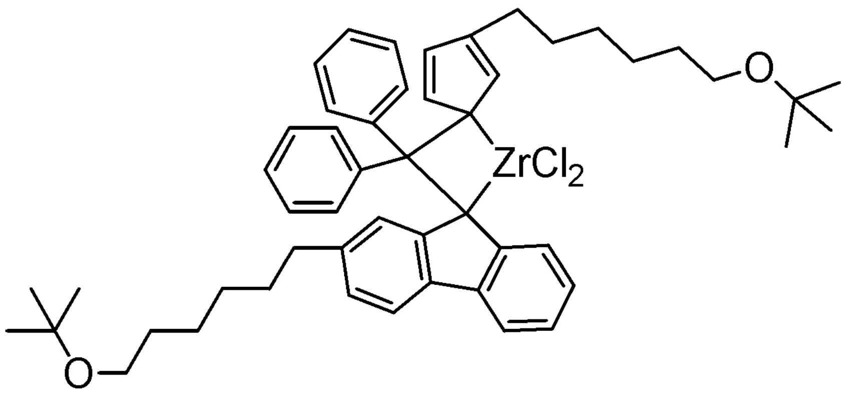

(1) Synthesis of Ligand

Under Ar atmosphere, 22.3 g (100 mmol) of *2-(6-tert*-butoxyhexyl)cyclopentadiene, 36.4 g (2.0 eq., 200 mmol) of benzophenone, and 200 mL of ethanol were charged into a dried 500 mL Schlenk flask. After cooling to 0 °C, 10.7 g (1.5 eq., 150 mmol) of pyrrolidine was added dropwise. The reaction mixture was slowly raised to room temperature and stirred for 24 hours. The reaction mixture was then cooled to 0 °C, followed by the addition of 200 mL of 10 vol% aqueous acetic acid, and stirred for 30 minutes. The organic layer was separated using water and diethyl ether, and dried with $MgSO_4$ to obtain 28.4 g (73.5 mmol, 73.5% yield) of 2-(6-*tert*-butoxyhexyl)-5-(diphenylmethylidene)-cyclopenta-1,3-diene.

Under Ar atmosphere, 5.45 g (16.9 mmol) of 2-(6-*tert*-butoxyhexyl)fluorene and 50 mL of tetrahydrofuran were charged into another dried 250 mL Schlenk flask. After cooling to -78 °C, 8.1 mL (1.2 eq., 20.3 mmol) of 2.5 M n-BuLi in hexane was added dropwise. The reaction mixture was slowly raised to room temperature and stirred for 8 hours. After cooling again to -78 °C, 6.53 g (1.0 eq., 16.9 mmol) of the above-synthesized 2-(6-*tert*-butoxyhexyl)-5-(diphenylmethylidene)-cyclopenta-1,3-diene together with 10 mL of tetrahydrofuran was charged. The mixture was slowly raised to room temperature and stirred for 24 hours, and then the organic layer was separated using water and diethyl ether. The organic layer was dried with $MgSO_4$ to obtain 9.71 g (13.7 mmol, 81.1% yield) of the ligand.

$^1H$ NMR (500 MHz, $CDCl_3$): 1.12 (18H, brs), 1.22-1.67 (16H, m), 2.12 (2H, t), 2.68 (2H, t), 2.93 (2H, m), 3.33 (4H, m), 4.73 (1H, brs), 6.11 (1H, m), 6.33 (1H, brs), 7.21-8.01 (17H, m).

(2) Synthesis of metallocene compound

Under Ar atmosphere, 9.71 g (13.7 mmol) of the ligand synthesized above, 20 mL of methyl *t*-butyl ether, and 80 mL of toluene were charged into a dried 250 mL Schlenk flask. After cooling to -78 °C, 12 mL (2.2 eq., 30 mmol) of 2.5 M n-BuLi in hexane was added dropwise. The reaction mixture was slowly raised to room temperature and stirred for 8 hours. After cooling again to -78 °C, 5.17 g (1.0 eq., 13.7 mmol) of $ZrCl_4(THF)_2$ together with 15 mL of methyl t-butyl ether was charged. The mixture was slowly raised to room temperature and stirred for 24 hours, followed by drying under reduced pressure at room temperature to remove methyl *t*-butyl ether. The resulting toluene suspension was filtered under Ar atmosphere to remove LiCl, and the filtrate was dried under reduced pressure at 50 °C, followed by charging with n-hexane. The resulting suspension was then filtered under Ar atmosphere to obtain 6.25 g (7.19 mmol, 52.5% yield) of the metallocene compound B7 in solid form.

$^1H$ NMR (500 MHz, $C_6D_6$): 1.06-1.15 (18H, brs), 1.23-1.72 (16H, m), 2.21 (2H, t), 2.75 (2H, t), 3.33 (2H, t), 5.52-6.41 (3H, m), 7.16-7.69 (15H, m), 7.91 (2H, d).

**Synthesis Example 2-8: Preparation of metallocene compound B8**

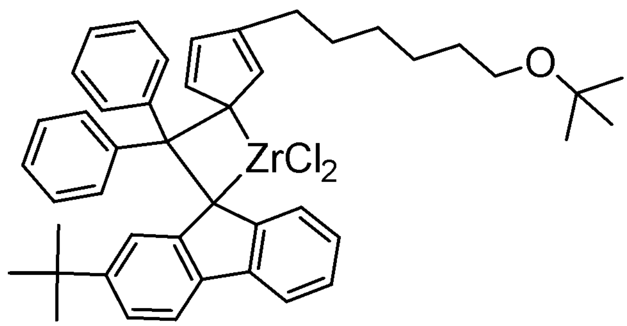

(1) Synthesis of Ligand

Under Ar atmosphere, 5.45 g (18.6 mmol) of 2-tert-butylfluorene and 60 mL of tetrahydrofuran were charged into another dried 250 mL Schlenk flask. After cooling to -78 °C, 8.9 mL (1.2 eq., 22.3 mmol) of 2.5 M n-BuLi in hexane was added dropwise. The reaction mixture was slowly raised to room temperature and stirred for 8 hours. After cooling again to -78 °C, 7.19 g (1.0 eq., 18.6 mmol) of the 2-(6-*tert*-butoxyhexyl)-5-(diphenylmethylidene)-cyclopenta-1,3-diene obtained in B7 together with 10 mL of tetrahydrofuran was charged. The mixture was slowly raised to room temperature and stirred for 24 hours, and then the organic layer was separated using water and diethyl ether. The organic layer was dried with $MgSO_4$ to obtain 9.68 g (15.9 mmol, 85.5% yield) of the ligand.

$^1H$ NMR (500 MHz, $CDCl_3$): 1.10 (9H, s), 1.24 (9H, s), 1.27-1.66 (8H, m), 2.13 (2H, t), 2.91 (2H, m), 3.34 (2H, t), 4.53 (1H, brs), 6.21 (1H, m), 6.36 (1H, brs), 7.05-7.90 (17H, m).

(2) Synthesis of metallocene compound

Under Ar atmosphere, 9.68 g (15.9 mmol) of the ligand synthesized above, 20 mL of methyl t-butyl ether, and 80 mL of toluene were charged into a dried 250 mL Schlenk flask. After cooling to -78 °C, 14 mL (2.2 eq., 35 mmol) of 2.5 M n-BuLi in hexane was added dropwise. The reaction mixture was slowly raised to room temperature and stirred for 8 hours. After cooling again to -78 °C, 6.00 g (1.0 eq., 15.9 mmol) of $ZrCl_4(THF)_2$ together with 15 mL of methyl t-butyl ether was charged. The mixture was slowly raised to room temperature and stirred for 24 hours, followed by drying under reduced pressure at room temperature to remove methyl t-butyl ether. The resulting toluene suspension was filtered under Ar atmosphere to remove LiCl, and the filtrate was dried under reduced pressure at 50 °C, followed by charging with n-hexane. The resulting suspension was then filtered under Ar atmosphere to obtain 6.37 g (8.28 mmol, 52.1% yield) of the metallocene compound B8 in solid form.

$^1H$ NMR (500 MHz, $C_6D_6$): 1.15 (9H, s), 1.21 (9H, s), 1.24-1.68 (16H, m), 2.24 (2H, t), 3.34 (2H, t), 5.62-6.44 (3H, m), 7.10-7.73 (13H, m), 7.75-7.94 (2H, m).

**Synthesis Example 2-9: Preparation of metallocene compound B9**

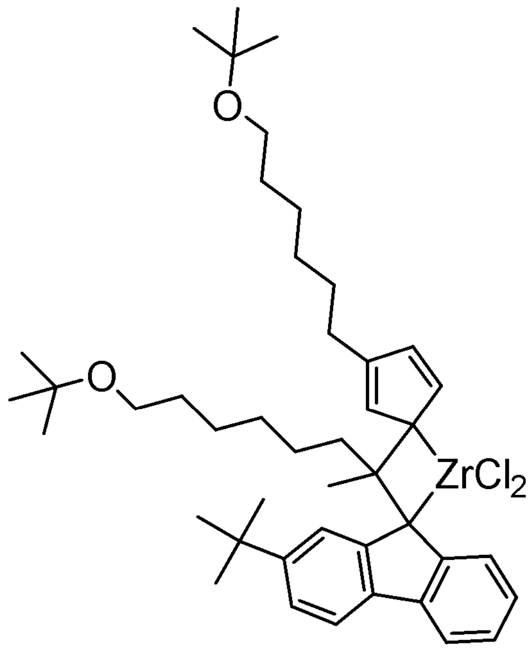

(1) Synthesis of Ligand

Under Ar atmosphere, 4.45 g (20 mmol) of *2-(6-tert*-butoxyhexyl)cyclopentadiene, 8.01 g (2.0 eq., 40 mmol) of 8-*tert*-butoxy-2-octanone, and 50 mL of methanol were charged into a dried 250 mL Schlenk flask. After cooling to 0 °C, 2.13 g (1.5 eq., 30 mmol) of pyrrolidine was added dropwise. The reaction mixture was slowly raised to room temperature and stirred for 24 hours. The reaction mixture was then cooled to 0 °C, followed by the addition of 50 mL of 10 vol% aqueous acetic acid, and stirred for 30 minutes. The organic layer was separated using water and diethyl ether, and dried with $MgSO_4$ to obtain 6.31 g (15.6 mmol, 78% yield) of 2-(6-*tert*-butoxyhexyl)-5-(1-methyl-7-*tert*-butoxyheptylidene)-cyclopenta-1,3-diene.

Under Ar atmosphere, 3.47 g (15.6 mmol) of 2-*tert*-butylfluorene and 50 mL of tetrahydrofuran were charged into another dried 250 mL Schlenk flask. After cooling to -78 °C, 7.4 mL (1.2 eq., 18.5 mmol) of 2.5 M n-BuLi in hexane was added dropwise. The reaction mixture was slowly raised to room temperature and stirred for 8 hours. After cooling again to -78 °C, 6.31 g (1.0 eq., 15.6 mmol) of the above-synthesized 2-(6-*tert*-butoxyhexyl)-5-(1-methyl-7-*tert*-butoxyheptylidene)-cyclopenta-1,3-diene together with 10 mL of tetrahydrofuran was charged. The mixture was slowly raised to room temperature and stirred for 24 hours, and then the organic layer was separated using water and diethyl ether. The organic layer was dried with $MgSO_4$ to obtain 8.59 g (13.7 mmol, 87.8% yield) of the ligand.

$^1H$ NMR (500 MHz, $CDCl_3$): 0.97 (3H, brs), 1.11 (18H, brs), 1.17 (2H, m), 1.25 (9H, s), 1.27-1.65 (16H, m), 2.10 (2H, t), 2.90 (2H, m), 3.33 (2H, m), 3.83 (1H, brs), 6.13 (1H, m), 6.26 (1H, brs), 7.21-7.44 (3H, m), 7.51-7.65 (2H, m), 7.78 (1H, d), 7.91 (1H, d).

(2) Synthesis of metallocene compound

Under Ar atmosphere, 8.59 g (13.7 mmol) of the ligand synthesized above, 20 mL of methyl t-butyl ether, and 80 mL of toluene were charged into a dried 250 mL Schlenk flask. After cooling to -78 °C, 12 mL (2.2 eq., 30 mmol) of 2.5 M n-BuLi in hexane was added dropwise. The reaction mixture was slowly raised to room temperature and stirred for 8 hours. After cooling again to -78 °C, 5.17 g (1.0 eq., 13.7 mmol) of $ZrCl_4(THF)_2$ together with 15 mL of methyl t-butyl ether was charged. The mixture was slowly raised to room temperature and stirred for 24 hours, followed by drying under reduced pressure at room temperature to remove methyl t-butyl ether. The resulting toluene suspension was filtered under Ar atmosphere to remove LiCl, and the filtrate was dried under reduced pressure at 50 °C, followed by charging with n-hexane. The resulting suspension was then filtered under Ar atmosphere to obtain 6.35 g (8.07 mmol, 58.9% yield) of the metallocene compound B9 in solid form.

$^1H$ NMR (500 MHz, $C_6D_6$): 1.04 (3H, brs), 1.12 (20H, brs), 1.27 (9H, s), 1.34-1.70 (16H, m), 2.27 (2H, t), 3.34 (4H,

m), 5.42-6.36 (3H, m), 7.12-7.39 (3H, m), 7.48-7.61 (2H, m), 7.73-7.94 (2H, m).

**Synthesis Example 2-10: Preparation of metallocene compound B10**

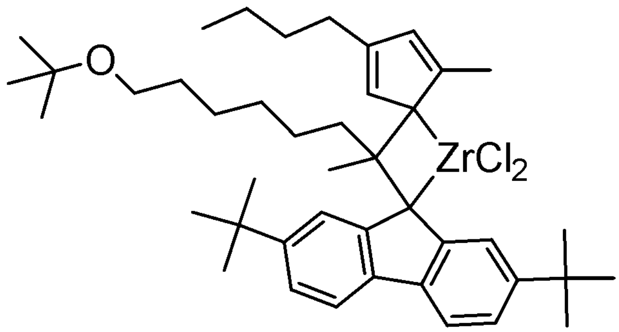

(1) Synthesis of Ligand

Under Ar atmosphere, 2.72 g (20 mmol) of 1-methyl-3-n-butylcyclopenta-1,3-diene, 8.01 g (2.0 eq., 40 mmol) of 8-*tert*-butoxy-2-octanone, and 50 mL of methanol were charged into a dried 250 mL Schlenk flask. After cooling to 0 °C, 2.13 g (1.5 eq., 30 mmol) of pyrrolidine was added dropwise. The reaction mixture was slowly raised to room temperature and stirred for 24 hours. The reaction mixture was then cooled to 0 °C, followed by the addition of 50 mL of 10 vol% aqueous acetic acid, and stirred for 30 minutes. The organic layer was separated using water and diethyl ether, and dried with $MgSO_4$ to obtain 4.56 g (14.3 mmol, 78% yield) of 1-methyl-3-n-butyl-5-(1-methyl-7-*tert*-butoxyheptylidene)-cyclopenta-1,3-diene.

Under Ar atmosphere, 3.98 g (14.3 mmol) of 2,7-di-*tert*-butylfluorene and 50 mL of tetrahydrofuran were charged into another dried 250 mL Schlenk flask. After cooling to -78 °C, 6.8 mL (1.2 eq., 17 mmol) of 2.5 M n-BuLi in hexane was added dropwise. The reaction mixture was slowly raised to room temperature and stirred for 8 hours. After cooling again to -78 °C, 4.56 g (1.0 eq., 14.3 mmol) of the above-synthesized 1-methyl-3-*n*-butyl-5-(1-methyl-7-tert-butoxyheptylidene)-cyclopenta-1,3-diene together with 10 mL of tetrahydrofuran was charged. The mixture was slowly raised to room temperature and stirred for 24 hours, and then the organic layer was separated using water and diethyl ether. The organic layer was dried with $MgSO_4$ to obtain 6.92 g (11.6 mmol, 81.2% yield) of the ligand.

$^1$H NMR (500 MHz, $CDCl_3$): 0.95 (6H, m), 1.10 (9H, s), 1.16 (2H, m), 1.28 (18H, brs), 1.30-1.65 (12H, m), 1.81 (3H, m), 2.16 (2H, t), 2.91 (2H, m), 3.34 (2H, t), 3.78 (1H, brs), 6.30 (1H, brs), 7.41 (2H, dd), 7.61 (2H, d), 7.87 (2H, d).

(2) Synthesis of metallocene compound

Under Ar atmosphere, 6.92 g (11.6 mmol) of the ligand synthesized above, 20 mL of methyl *t*-butyl ether, and 80 mL of toluene were charged into a dried 250 mL Schlenk flask. After cooling to -78 °C, 10.2 mL (2.2 eq., 25.5 mmol) of 2.5 M n-BuLi in hexane was added dropwise. The reaction mixture was slowly raised to room temperature and stirred for 8 hours. After cooling again to -78 °C, 4.38 g (1.0 eq., 11.6 mmol) of $ZrCl_4(THF)_2$ together with 15 mL of methyl t-butyl ether was charged. The mixture was slowly raised to room temperature and stirred for 24 hours, followed by drying under reduced pressure at room temperature to remove methyl *t*-butyl ether. The resulting toluene suspension was filtered under Ar atmosphere to remove LiCl, and the filtrate was dried under reduced pressure at 50 °C, followed by charging with n-hexane. The resulting suspension was then filtered under Ar atmosphere to obtain 5.25 g (6.93 mmol, 59.7% yield) of the metallocene compound B10 in solid form.

$^1$H NMR (500 MHz, $C_6D_6$): 0.88 (3H, s), 1.07 (3H, m), 1.16 (9H, s), 1.20 (2H, m), 1.31 (18H, brs), 1.34-1.69 (12H, m), 1.85 (3H, s), 2.20 (2H, t), 3.30 (2H, t), 6.02-6.36 (2H, m), 7.36 (2H, dd), 7.51 (2H, d), 7.79 (2H, d).

**Synthesis Example 2-11: Preparation of metallocene compound B11**

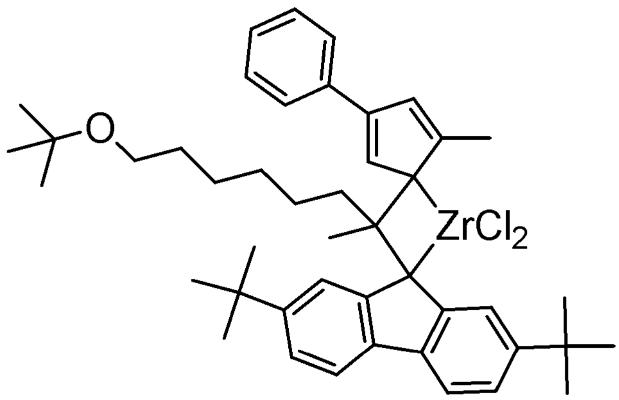

(1) Synthesis of Ligand

Under Ar atmosphere, 3.12 g (20 mmol) of 1-methyl-3-phenylcyclopenta-1,3-diene, 8.01 g (2.0 eq., 40 mmol) of 8-*tert*-butoxy-2-octanone, and 50 mL of methanol were charged into a dried 250 mL Schlenk flask. After cooling to 0 °C, 2.13 g (1.5 eq., 30 mmol) of pyrrolidine was added dropwise. The reaction mixture was slowly raised to room temperature and stirred for 24 hours. The reaction mixture was then cooled to 0 °C, followed by the addition of 50 mL of 10 vol% aqueous acetic acid, and stirred for 30 minutes. The organic layer was separated using water and diethyl ether, and dried with $MgSO_4$ to obtain 4.57 g (13.5 mmol, 67.5% yield) of 1-methyl-3-phenyl-5-(1-methyl-7-*tert*-butoxyheptylidene)-cyclopenta-1,3-diene.

Under Ar atmosphere, 3.76 g (13.5 mmol) of 2,7-di-*tert*-butylfluorene and 50 mL of tetrahydrofuran were charged into another dried 250 mL Schlenk flask. After cooling to -78 °C, 6.4 mL (1.2 eq., 16 mmol) of 2.5 M n-BuLi in hexane was added dropwise. The reaction mixture was slowly raised to room temperature and stirred for 8 hours. After cooling again to -78 °C, 4.57 g (1.0 eq., 13.5 mmol) of the above-synthesized 1-methyl-3-phenyl-5-(1-methyl-7-*tert*-butoxyheptylidene)-cyclopenta-1,3-diene together with 10 mL of tetrahydrofuran was charged. The mixture was slowly raised to room temperature and stirred for 24 hours, and then the organic layer was separated using water and diethyl ether. The organic layer was dried with $MgSO_4$ to obtain 6.60 g (10.7 mmol, 79.3% yield) of the ligand.

$^1H$ NMR (500 MHz, $CDCl_3$): 0.93 (3H, m), 1.15 (9H, s), 1.19 (2H, m), 1.23 (18H, s), 1.26-1.61 (8H, m), 1.91 (3H, m), 2.95 (2H, m), 3.37 (2H, t), 3.75 (1H, brs), 6.79 (2H, m), 7.11-7.25 (3H, m), 7.44 (2H, dd), 7.61 (2H, d), 7.83 (2H, d).

(2) Synthesis of metallocene compound

Under Ar atmosphere, 6.60 g (10.7 mmol) of the ligand synthesized above, 20 mL of methyl t-butyl ether, and 80 mL of toluene were charged into a dried 250 mL Schlenk flask. After cooling to -78 °C, 9.4 mL (2.2 eq., 23.5 mmol) of 2.5 M n-BuLi in hexane was added dropwise. The reaction mixture was slowly raised to room temperature and stirred for 8 hours. After cooling again to -78 °C, 4.04 g (1.0 eq., 10.7 mmol) of $ZrCl_4(THF)_2$ together with 15 mL of methyl *t*-butyl ether was charged. The mixture was slowly raised to room temperature and stirred for 24 hours, followed by drying under reduced pressure at room temperature to remove methyl t-butyl ether. The resulting toluene suspension was filtered under Ar atmosphere to remove LiCl, and the filtrate was dried under reduced pressure at 50 °C, followed by charging with n-hexane. The resulting suspension was then filtered under Ar atmosphere to obtain 4.47 g (5.75 mmol, 53.7% yield) of the metallocene compound B11 in solid form.

$^1H$ NMR (500 MHz, $C_6D_6$): 1.05 (3H, m), 1.18 (9H, s), 1.22 (2H, m), 1.30 (18H, brs), 1.32-1.59 (8H, m), 1.91 (3H, s), 3.34 (2H, t), 6.12-6.76 (2H, m), 7.16 (2H, m), 7.30-7.45 (5H, m), 7.66 (2H, d), 7.99 (2H, d).

**Synthesis Example 2-12: Preparation of metallocene compound B12**

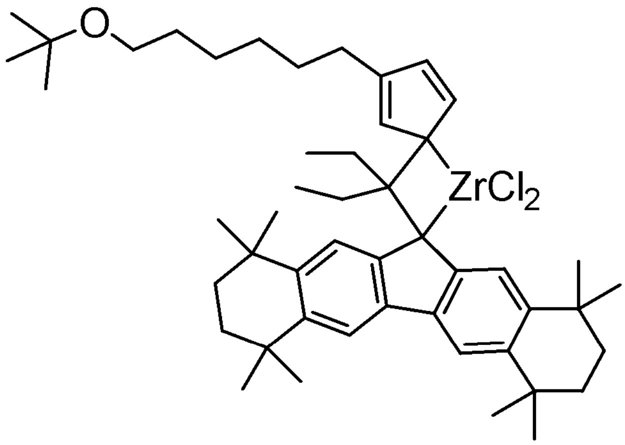

(1) Synthesis of Ligand

Under Ar atmosphere, 5.57 g (25 mmol) of *2-(6-tert*-butoxyhexyl)cyclopentadiene, 4.31 g (2.0 eq., 50 mmol) of 3-pentanone, and 60 mL of methanol were charged into a dried 250 mL Schlenk flask. After cooling to 0 °C, 2.67 g (1.5 eq., 37.5 mmol) of pyrrolidine was added dropwise. The reaction mixture was slowly raised to room temperature and stirred for 24 hours. The reaction mixture was then cooled to 0 °C, followed by the addition of 60 mL of 10 vol% aqueous acetic acid, and stirred for 30 minutes. The organic layer was separated using water and diethyl ether, and dried with $MgSO_4$ to obtain 3.49 g (12.0 mmol, 48% yield) of *2-(6-tert*-butoxyhexyl)-5-(pentan-3-ylidene)-cyclopenta-1,3-diene.

Under Ar atmosphere, 4.64 g (12 mmol) of 1,1,4,4,7,7,10,10-octamethyl-2,3,4,7,8,9,10,12-octahydro-1*H*-dibenzo[b,h]fluorene and 50 mL of tetrahydrofuran were charged into another dried 250 mL Schlenk flask. After cooling to -78 °C, 5.7 mL (1.2 eq., 14.3 mmol) of 2.5 M n-BuLi in hexane was added dropwise. The reaction mixture was slowly raised to room temperature and stirred for 8 hours. After cooling again to -78 °C, 3.49 g (1.0 eq., 12 mmol) of the above-synthesized *2-(6-tert*-butoxyhexyl)-5-(pentan-3-ylidene)-cyclopenta-1,3-diene together with 10 mL of tetrahydrofuran was charged. The mixture was slowly raised to room temperature and stirred for 24 hours, and then the organic layer was separated using water and diethyl ether. The organic layer was dried with $MgSO_4$ to obtain 4.64 g (6.85 mmol, 57.1% yield) of the ligand.

$^1$H NMR (500 MHz, $CDCl_3$): 0.86 (30H, m), 1.12 (9H, s), 1.19 (4H, m), 1.26-1.61 (16H, m), 2.21 (2H, t), 2.91 (2H, m), 3.32 (2H, t), 3.71 (1H, brs), 6.01-6.48 (2H, m), 7.49 (2H, s), 7.84 (2H, s).

(2) Synthesis of metallocene compound

Under Ar atmosphere, 4.64 g (6.85 mmol) of the ligand synthesized above, 20 mL of methyl t-butyl ether, and 80 mL of toluene were charged into a dried 250 mL Schlenk flask. After cooling to -78 °C, 6 mL (2.2 eq., 15 mmol) of 2.5 M n-BuLi in hexane was added dropwise. The reaction mixture was slowly raised to room temperature and stirred for 8 hours. After cooling again to -78 °C, 2.58 g (1.0 eq., 6.85 mmol) of $ZrCl_4(THF)_2$ together with 10 mL of methyl *t*-butyl ether was charged. The mixture was slowly raised to room temperature and stirred for 24 hours, followed by drying under reduced pressure at room temperature to remove methyl *t*-butyl ether. The resulting toluene suspension was filtered under Ar atmosphere to remove LiCl, and the filtrate was dried under reduced pressure at 50 °C, followed by charging with n-hexane. The resulting suspension was then filtered under Ar atmosphere to obtain 2.70 g (3.22 mmol, 47% yield) of the metallocene compound B12 in solid form.

$^1$H NMR (500 MHz, $C_6D_6$): 0.75 (6H, t), 0.87 (24H, s), 1.15 (9H, s), 1.25 (4H, m), 1.30-1.57 (16H, m), 2.34 (2H, t), 3.37 (2H, t), 6.02-6.57 (3H, m), 7.39 (2H, s), 7.90 (2H, s).

**Synthesis Example 2-13: Preparation of metallocene compound B13**

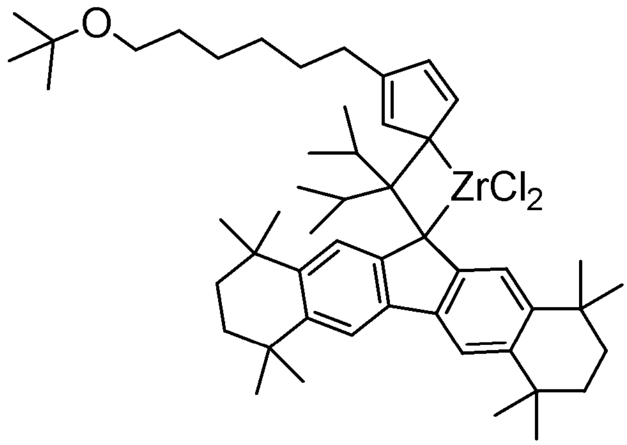

(1) Synthesis of Ligand

Under Ar atmosphere, 6.57 g (17 mmol) of 1,1,4,4,7,7,10,10-octamethyl-2,3,4,7,8,9,10, 12-octahydro-1*H*-dibenzo[*b*,*h*]fluorene and 80 mL of tetrahydrofuran were charged into another dried 250 mL Schlenk flask. After cooling to -78 °C, 8.1 mL (1.2 eq., 20.3 mmol) of 2.5 M n-BuLi in hexane was added dropwise. The reaction mixture was slowly raised to room temperature and stirred for 8 hours. After cooling again to -78 °C, 5.42 g (1.0 eq., 17 mmol) of 2-(6-*tert*-butoxyhexyl)-5-(2,4-dimethylpentan-3-ylidene)-cyclopenta-1,3-diene synthesized in B2 together with 10 mL of tetrahydrofuran was charged. The mixture was slowly raised to room temperature and stirred for 24 hours, and then the organic layer was separated using water and diethyl ether. The organic layer was dried with $MgSO_4$ to obtain 5.24 g (7.43 mmol, 43.7% yield) of the ligand.

$^1H$ NMR (500 MHz, $CDCl_3$): 0.82 (12H, m), 0.92 (24H, s), 1.10 (9H, s), 1.26-1.65 (18H, m), 2.15 (2H, t), 2.91 (2H, m), 3.34 (2H, t), 3.78 (1H, brs), 6.02-6.50 (2H, m), 7.43 (2H, s), 7.82 (2H, s).

(2) Synthesis of metallocene compound

Under Ar atmosphere, 5.24 g (7.43 mmol) of the ligand synthesized above, 20 mL of methyl t-butyl ether, and 80 mL of toluene were charged into a dried 250 mL Schlenk flask. After cooling to -78 °C, 6.5 mL (2.2 eq., 16.3 mmol) of 2.5 M n-BuLi in hexane was added dropwise. The reaction mixture was slowly raised to room temperature and stirred for 8 hours. After cooling again to -78 °C, 2.80 g (1.0 eq., 7.43 mmol) of $ZrCl_4(THF)_2$ together with 10 mL of methyl t-butyl ether was charged. The mixture was slowly raised to room temperature and stirred for 24 hours, followed by drying under reduced pressure at room temperature to remove methyl *t*-butyl ether. The resulting toluene suspension was filtered under Ar atmosphere to remove LiCl, and the filtrate was dried under reduced pressure at 50 °C, followed by charging with n-hexane. The resulting suspension was then filtered under Ar atmosphere to obtain 2.93 g (3.39 mmol, 45.6% yield) of the metallocene compound B13 in solid form.

$^1H$ NMR (500 MHz, $C_6D_6$): 0.71 (12H, m), 0.84 (24H, s), 1.13 (9H, s), 1.27-1.57 (20H, m), 2.24 (2H, t), 3.32 (2H, t), 5.82-6.47 (3H, m), 7.49 (2H, s), 7.77 (2H, s).

**<Preparation of Supported Catalyst>**

**Preparation Example 1: Preparation of Catalyst 1**

Silica (SP 952, manufactured by Grace Davison) was dehydrated and dried under vacuum at 200 °C for 12 hours.

800 g of the dried silica was charged into a 20 L SUS reactor, and 6 kg of a methylaluminoxane (MAO) solution (10 wt% in toluene) was added thereto. The mixture was slowly reacted while stirring at 70 °C for 1 hour. After completion of the reaction, unreacted aluminum compounds were thoroughly removed by repeatedly washing with a sufficient amount of toluene. A solution prepared by dissolving 25.4 g of metallocene compound A1 and 2.8 g of metallocene compound B2 in toluene was then sequentially added to the reactor, and the mixture was reacted while stirring at 40 °C for 4 hours. After washing with a sufficient amount of toluene, the product was vacuum dried to obtain hybrid supported metallocene catalyst 1 in the form of a solid powder.

**Preparation Examples 2 to 25: Preparation of Catalysts 2 to 25**

Hybrid supported metallocene catalysts 2 to 25 were prepared in the same manner as in Preparation Example 1, except that the types and amounts of the metallocene compounds used were changed as listed in Table 1 below, instead of 25.4 g of metallocene compound A1 and 2.8 g of metallocene compound B2.

**Preparation Examples 26 and 27: Preparation of Catalysts 2 to 25**

Hybrid supported metallocene catalysts 2 to 25 were prepared in the same manner as in Preparation Example 1, except that the types and amounts of the metallocene compounds used were changed as listed in Table 1 below, instead of 25.4 g of metallocene compound A1 and 2.8 g of metallocene compound B2. The structures of metallocene compounds A14, A15, B14, and B15 used in Preparation Examples 26 and 27 are shown below.

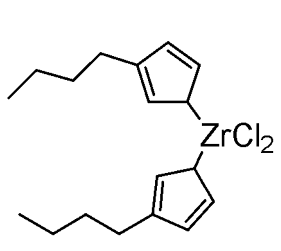

**A14**

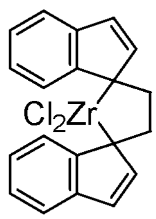

**A15**

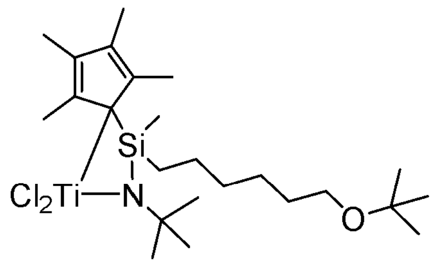

**B14**

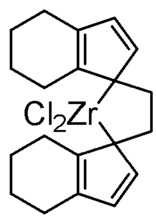

**B15**

[Table 1]

| Prep. Ex. | Catalyst | Metallocene compound 1 | Metallocene compound 2 | Ratio | Metallocene compound 1(g) | Metallocene compound 2(g) |
|---|---|---|---|---|---|---|
| Prep. Ex.1 | Catalyst 1 | A1 | B2 | 10 | 25.4 | 2.8 |
| Prep. Ex.2 | Catalyst 2 | A2 | B2 | 7 | 24.5 | 3.9 |
| Prep. Ex.3 | Catalyst 3 | A3 | B2 | 8 | 26.1 | 3.4 |
| Prep. Ex.4 | Catalyst 4 | A4 | B2 | 20 | 30.1 | 1.5 |
| Prep. Ex.5 | Catalyst 5 | A5 | B2 | 6 | 26.4 | 4.4 |
| Prep. Ex.6 | Catalyst 6 | A6 | B2 | 15 | 29.0 | 1.9 |
| Prep. Ex.7 | Catalyst 7 | A7 | B2 | 4 | 25.3 | 6.2 |
| Prep. Ex.8 | Catalyst 8 | A8 | B2 | 3 | 24.4 | 7.7 |
| Prep. Ex.9 | Catalyst 9 | A9 | B2 | 7 | 28.7 | 3.9 |
| Prep. Ex.10 | Catalyst 10 | A10 | B2 | 17 | 33.8 | 1.7 |
| Prep. Ex.11 | Catalyst 11 | A11 | B2 | 12 | 31.3 | 2.4 |
| Prep. Ex.12 | Catalyst 12 | A12 | B2 | 3 | 22.1 | 7.7 |
| Prep. Ex. 13 | Catalyst 13 | A13 | B2 | 5 | 28.2 | 5.2 |
| Prep. Ex.14 | Catalyst 14 | A3 | B1 | 11 | 26.9 | 2.8 |
| Prep. Ex.15 | Catalyst 15 | A3 | B3 | 9 | 26.4 | 3.4 |
| Prep. Ex.16 | Catalyst 16 | A3 | B4 | 12 | 27.1 | 3.0 |
| Prep. Ex.17 | Catalyst 17 | A3 | B5 | 8 | 26.1 | 3.8 |
| Prep. Ex.18 | Catalyst 18 | A3 | B6 | 16 | 27.6 | 1.8 |
| Prep. Ex.19 | Catalyst 19 | A3 | B7 | 14 | 27.4 | 1.9 |
| Prep. Ex.20 | Catalyst 20 | A3 | B8 | 12 | 27.1 | 3.0 |
| Prep. Ex.21 | Catalyst 21 | A3 | B9 | 6 | 25.1 | 4.0 |

(continued)

| Prep. Ex. | Catalyst | Metallocene compound 1 | Metallocene compound 2 | Ratio | Metallocene compound 1(g) | Metallocene compound 2(g) |
|---|---|---|---|---|---|---|
| Prep. Ex.22 | Catalyst 22 | A3 | B10 | 7 | 25.7 | 4.3 |
| Prep. Ex.23 | Catalyst 23 | A3 | B11 | 5 | 24.4 | 5.6 |
| Prep. Ex.24 | Catalyst 24 | A3 | B12 | 13 | 27.2 | 1.8 |
| Prep. Ex.25 | Catalyst 25 | A3 | B13 | 6 | 25.1 | 2.9 |
| Prep. Ex. 26 | Catalyst 26 | A14 | B14 | 3 | 14.6 | 6.1 |
| Prep. Ex. 27 | Catalyst 27 | A15 | B15 | 2 | 13.4 | 6.8 |
| (In Table 1, the "Ratio" refers to the molar amount of metallocene compound 1 divided by the molar amount of metallocene compound 2.) | | | | | | |

**<Production of Polyethylene copolymer>**

**Examples 1-1 to 1-25 and Comparative Examples 1-1 to 1-4**

A continuous polymerization reactor of 140 L volume, operating as an isobutane slurry loop process, was used at a reaction flow rate of about 7 m/s. Gases required for the polymerization (ethylene, hydrogen) and the comonomer were continuously fed at a constant rate, and the individual flow rates were adjusted according to the target product. The concentrations of all gases and of the comonomer 1-hexene were monitored by an on-line gas chromatograph. The supported catalyst was introduced into the reactor as an isobutane slurry. The reactor pressure was maintained at 40 bar, and the polymerization was carried out at 80 °C.

The ethylene feed, solvent (i-butane) feed, 1-hexene/ethylene feed ratio, and hydrogen/ethylene feed ratio used for preparing polyethylene copolymers of Examples 1-1 to 1-25 and Comparative Examples 1-1 to 1-4 are shown in Table 2 below.

[Table 2]

| | Catalyst | Process conditions | | | |
|---|---|---|---|---|---|
| | | Ethylene feed (kg/h) | i-Butane feed (kg/h) | 1-Hexene/Ethylene (wt%) | Hydrogen/Ethylene (ppmw) |
| Ex. 1-1 | Cat. 1 | 25.2 | 24 | 7.2 | 30 |
| Ex. 1-2 | Cat. 2 | 25.1 | 25 | 6.6 | 48 |
| Ex. 1-3 | Cat. 3 | 25 | 30 | 6.5 | 22 |
| Ex. 1-4 | Cat. 4 | 25 | 28 | 6.7 | 52 |
| Ex. 1-5 | Cat. 5 | 25.1 | 26 | 8.3 | 45 |
| Ex. 1-6 | Cat. 6 | 25 | 25 | 8.7 | 38 |
| Ex. 1-7 | Cat. 7 | 25.2 | 28 | 8 | 29 |
| Ex. 1-8 | Cat. 8 | 25.1 | 30 | 7.1 | 32 |
| Ex. 1-9 | Cat. 9 | 25 | 22 | 6.8 | 45 |
| Ex. 1-10 | Cat. 10 | 25 | 29 | 7.7 | 80 |
| Ex. 1-11 | Cat. 11 | 25.1 | 25 | 7.8 | 52 |
| Ex. 1-12 | Cat. 12 | 25.1 | 25 | 6.8 | 48 |
| Ex. 1-13 | Cat. 13 | 25.1 | 28 | 6.9 | 55 |
| Ex. 1-14 | Cat. 14 | 25 | 30 | 7.7 | 33 |
| Ex. 1-15 | Cat. 15 | 25 | 27 | 7.8 | 49 |
| Ex. 1-16 | Cat. 16 | 25 | 30 | 6.5 | 77 |

(continued)

| | Catalyst | Process conditions | | | |
|---|---|---|---|---|---|
| | | Ethylene feed (kg/h) | i-Butane feed (kg/h) | 1-Hexene/Ethylene (wt%) | Hydrogen/Ethylene (ppmw) |
| Ex. 1-17 | Cat. 17 | 25.1 | 28 | 6.9 | 32 |
| Ex. 1-18 | Cat. 18 | 25.2 | 29 | 6.6 | 21 |
| Ex. 1-19 | Cat. 19 | 25 | 23 | 6.8 | 58 |
| Ex. 1-20 | Cat. 20 | 25 | 27 | 7.2 | 61 |
| Ex. 1-21 | Cat. 21 | 25.2 | 27 | 7.5 | 66 |
| Ex. 1-22 | Cat. 22 | 25.1 | 26 | 7.6 | 74 |
| Ex. 1-23 | Cat. 23 | 25 | 28 | 7.4 | 61 |
| Ex. 1-24 | Cat. 24 | 25 | 30 | 6.8 | 25 |
| Ex. 1-25 | Cat. 25 | 25 | 30 | 6.9 | 36 |
| Comp. Ex. 1-1 | Cat. 3 | 25 | 30 | 8.5 | 45 |
| Comp. Ex. 1-2 | Cat. 26 | 25.1 | 30 | 10 | 23 |
| Comp. Ex. 1-3 | Cat. 27 | 25.0 | 19 | 5.5 | 54 |
| Comp. Ex. 1-4 | Cat. 7 | 25.1 | 25 | 6.8 | 69 |

**<Experimental Example 1: Evaluation of physical properties of polyethylene copolymers>**

The physical properties of the polyethylene copolymers prepared in Examples 1-1 to 1-25 and Comparative Examples 1-1 to 1-4 were evaluated, and the results are shown in Table 3 below. The methods for evaluating the physical properties of the polyethylene copolymers are as follows.

(1) $MI_{2.16}$ and MFRR ($MFR_{21.6}/MFR_{2.16}$)

The melt index ($MI_{2.16}$) was measured in accordance with ASTM D1238 (Condition E, 190 °C, 2.16 kg load). The melt flow rate ratio (MFRR, $MFR_{21.6}/MFR_{2.16}$) was calculated by dividing $MFR_{21.6}$ by $MFR_{2.16}$, where $MFR_{21.6}$ was measured at 190 °C under a load of 21.6 kg according to ISO 1133, and $MFR_{2.16}$ was measured at 190 °C under a load of 2.16 kg according to ISO 1133.

(2) Density ($g/cm^3$)

The density ($g/cm^3$) was measured in accordance with ASTM D792.

(3) Molecular structure analysis: Cross Fractionation Chromatography (CFC)

- Analytical instrument: Polymer Char CFC (Detector: Integrated Detector IR5 MCT)
- Sample preparation and injection: 32 mg of the polyethylene copolymer was placed in a 10 mL vial at the autosampler, and 8 mL of trichlorobenzene (TCB) was added, followed by dissolution at 160 °C for 90 minutes, nitrogen purging, extraction, and loading onto a TREF column.
- Crystallization: The sample loaded onto the TREF column was cooled from 100 °C to 35 °C at a rate of 0.5 °C/min.
- Temperature rising elution fractionation (TREF) analysis: The crystallized sample was fixed by raising the temperature from 35 °C to 120 °C at 1 °C intervals, and the amount eluted at each temperature for 25 minutes was analyzed (25-minute extraction at 35 °C followed by analysis - 25-minute extraction at 36 °C followed by analysis → ⋯ → 25-minute extraction at 120 °C followed by analysis)
- GPC-IR analysis: The molecules eluted at each temperature in the TREF analysis were transferred to a GPC column, and the molecular weight and the number of short-chain branches (scb) of the eluted molecules were analyzed.

1) Method for measuring high-crystalline, medium-crystalline, low-crystalline contents and soluble fraction

From the TREF analysis graph, the content ratio ($T \leq 35$ °C) of the soluble fraction (SF) eluted at an elution temperature of 35 °C or lower, the content ratio (35 °C $<T\leq70$ °C) of the polymer fraction (low-crystalline; M1) eluted at an elution temperature exceeding 35 °C and 70 °C or lower, and the content ratio ($T>90$ °C) of the polymer fraction (high-crystalline; M3) eluted at an elution temperature exceeding 90 °C were respectively calculated (wt%).

<fraction temperature>

35°C/40°C/43°C/46°C/49°C/52°C/55°C/58°C/61°C/64°C/67°C/70°C/73°C/76°C /79°C/82°C/85°C/88°C/91°C/94°C/97°C/100°C/105°C/120°C

2) Calculation of backbone weight-average molecular weight of high-crystalline fraction ($Mw_{,T>90°C}$)

The average molecular weight of the backbone (main-chain) portion of a fraction, excluding short-chain branch (scb) portions of molecules eluted at an elution temperature exceeding 90 °C as confirmed by CFC analysis, was calculated by Equation 1 below.

[Equation 1]

$$\text{Backbone Mw of high-crystalline fraction} = \frac{\sum_{T>90°C}\sum_i (M_{T,i} - M_{scb} * n_{T,i}^{scb}) * C_{T,i}}{\sum_{T>90°C}\sum_i C_{T,i}}$$

In Equation 1,

$M_{T,i}$ and $C_{T,i}$ : molecular weight and concentration of each molecule eluted at each temperature
$n^{scb}_{T,i}$ : the number of scb in each molecule
$M_{scb}$ : molecular weight of scb

3) Calculation of backbone weight-average molecular weight of low-crystalline fraction ($Mw_{,35<T\leq70°C}$)

The average molecular weight of the backbone (main-chain) portion of a fraction, excluding short-chain branch (scb) portions of molecules eluted at an elution temperature of $35<T\leq70$ °C as confirmed by CFC analysis, was calculated by Equation 2 below.

[Equation 2]

$$\text{Backbone Mw of low-crystalline fraction} = \frac{\sum_{35<T\leq70°C}\sum_i (M_{T,i} - M_{scb} * n_{T,i}^{scb}) * C_{T,i}}{\sum_{35<T\leq70°C}\sum_i C_{T,i}}$$

In Equation 2,

$M_{T,i}$ and $C_{T,i}$: molecular weight and concentration of each molecule eluted at each temperature

$n^{Scb}_{T,i}$: the number of scb in each molecule

$M_{scb}$ : molecular weight of scb

[Table 3]

| | Catalyst | Basic Properties | | | Molecular structure (CFC) | | | | |
|---|---|---|---|---|---|---|---|---|---|
| | | MI2.16 (g/10min) | MFRR | Density ($g/cm^3$) | Soluble Fraction (T≤35°C) | Low-crystalline content (35 °C <T ≤ 70°C ) | High-crystalline content (90°C <T) | Low-crystalline Mw | High-crystalline Mw |
| Ex. 1-1 | Cat. 1 | 1.34 | 26.1 | 0.927 | 11.3 | 25 | 51.1 | 40k | 129k |
| Ex. 1-2 | Cat. 2 | 1.37 | 29.1 | 0.931 | 7.7 | 21.3 | 55.2 | 37k | 125k |
| Ex. 1-3 | Cat. 3 | 1.33 | 25.8 | 0.932 | 0.7 | 12.1 | 48.3 | 45k | 112k |
| Ex. 1-4 | Cat. 4 | 1.41 | 29.1 | 0.931 | 2.5 | 15.5 | 56.1 | 36k | 118k |
| Ex. 1-5 | Cat. 5 | 1.58 | 27.6 | 0.928 | 8.2 | 20.1 | 49.1 | 38k | 108k |
| Ex. 1-6 | Cat. 6 | 1.54 | 26.7 | 0.930 | 7.4 | 17.2 | 52.2 | 42k | 107k |
| Ex. 1-7 | Cat. 7 | 1.44 | 27.2 | 0.929 | 8.1 | 19.9 | 51.6 | 44k | 120k |
| Ex. 1-8 | Cat. 8 | 1.51 | 28.5 | 0.929 | 5.2 | 20.2 | 52.3 | 42k | 116k |
| Ex. 1-9 | Cat. 9 | 1.34 | 29.2 | 0.930 | 8.8 | 17.7 | 55.5 | 39k | 103k |
| Ex. 1-10 | Cat. 10 | 1.69 | 29.5 | 0.927 | 10.2 | 23.8 | 51.8 | 36k | 105k |
| Ex. 1-11 | Cat. 11 | 1.53 | 28.5 | 0.929 | 11.3 | 25 | 51.1 | 40k | 129k |
| Ex. 1-12 | Cat. 12 | 1.52 | 29.8 | 0.932 | 7.7 | 21.3 | 55.2 | 37k | 125k |
| Ex. 1-13 | Cat. 13 | 1.45 | 29.1 | 0.933 | 2.5 | 15.5 | 56.1 | 36k | 118k |
| Ex. 1-14 | Cat. 14 | 1.88 | 27.2 | 0.926 | 0.7 | 12.1 | 48.3 | 45k | 112k |
| Ex. 1-15 | Cat. 15 | 1.68 | 27.7 | 0.927 | 8.2 | 20.1 | 49.1 | 38k | 108k |
| Ex. 1-16 | Cat. 16 | 1.73 | 26.2 | 0.930 | 7.4 | 17.2 | 52.2 | 42k | 107k |
| Ex. 1-17 | Cat. 17 | 1.38 | 27.8 | 0.929 | 8.1 | 19.9 | 51.6 | 44k | 120k |
| Ex. 1-18 | Cat. 18 | 1.57 | 27.7 | 0.930 | 5.2 | 20.2 | 52.3 | 42k | 116k |
| Ex. 1-19 | Cat. 19 | 1.76 | 26.8 | 0.931 | 8.8 | 17.7 | 55.5 | 39k | 103k |
| Ex. 1-20 | Cat. 20 | 1.86 | 26.8 | 0.929 | 10.2 | 23.8 | 51.8 | 36k | 105k |
| Ex. 1-21 | Cat. 21 | 1.75 | 26.1 | 0.928 | 5.2 | 15.2 | 50.8 | 41k | 110k |
| Ex. 1-22 | Cat. 22 | 1.76 | 26.1 | 0.928 | 0.3 | 11.5 | 50.2 | 42k | 108k |
| Ex. 1-23 | Cat. 23 | 1.45 | 27.3 | 0.929 | 3.2 | 17.2 | 51.8 | 45k | 122k |
| Ex. 1-24 | Cat. 24 | 1.59 | 26.8 | 0.930 | 2.2 | 24.1 | 52.6 | 38k | 108k |
| Ex. 1-25 | Cat. 25 | 1.66 | 25.2 | 0.930 | 1.7 | 22.3 | 53.1 | 44k | 101k |
| Comp. Ex. 1-1 | Cat. 3 | 3.57 | 21.6 | 0.928 | 4.3 | 28 | 43.3 | 42k | 78k |
| Comp. Ex. 1-2 | Cat. 26 | 0.93 | 18.8 | 0.916 | 7.7 | 16.9 | 11.3 | 160k | 101k |
| Comp. Ex. 1-3 | Cat. 27 | 0.31 | 64.4 | 0.927 | 0.5 | 2.6 | 3.1 | 14k | 103k |
| Comp. Ex. 1-4 | Cat. 7 | 3.32 | 25.0 | 0.934 | 2.7 | 23.4 | 55.6 | 42k | 84k |
| (In Table 3, "k" in the low-crystalline Mw and high-crystalline Mw indicates a factor of 1,000.) | | | | | | | | | |

The polyethylene copolymers of Examples 1-1 to 1-25, prepared using the first metallocene compound and the second metallocene compound, were found to have a structure having high-crystalline high molecular weight and low-crystalline low molecular weight, in which the backbone weight-average molecular weight of the high-crystalline fraction is high and the backbone weight-average molecular weight of the low-crystalline fraction is low. Meanwhile, Example 1-3 and Comparative Example 1-1 used the same catalyst; however, depending on the process conditions, Comparative Example 1-1 was found to have a content ratio of high-crystalline fraction lower than 45.0 wt%, and also to have a backbone weight-average molecular weight of high-crystalline fraction lower than that of the Example. Example 1-7 and Comparative Example 1-4 also used the same catalyst; however, depending on the process conditions, the backbone weight-average molecular weight of high-crystalline fraction of Comparative Example 1-4 was found to be lower than that of the Example.

Comparative Examples 1-2 and 1-3, which used catalysts including metallocene compounds of different structures as precursors, were found to mainly have a medium-crystalline content and to have a very low high-crystalline content. In addition, Comparative Example 1-2 was found to have a structure in which the backbone weight-average molecular weight of low-crystalline fraction is higher than the backbone weight-average molecular weight of high-crystalline fraction.

**<Preparation of Oriented Films>**

**Examples 2-1 to 2-10 and Comparative Examples 2-1 to 2-4**

Oriented films of Examples 2-1 to 2-10 and Comparative Examples 2-1 to 2-4 were prepared under the conditions below according to the orientation conditions in Table 4. At this time, the oriented films of Comparative Examples 2-2 and 2-3 could not be preheated and oriented under conditions of 120 to 127 °C.

- A polyethylene copolymer sheet having a thickness of 0.75 mm was prepared using a lab extruder line of Bruckner Co. (L/D ratio: 42, screw diameter: 25 mm, melt/T-die temperature: 220 °C).

- Biaxial orientation of the polyethylene copolymer sheet having a size of 50 mm × 50 mm was performed using a COAD.521 stretching apparatus of Ocean Science Co.

- After preheating for 90 seconds each, sequential orientation (MD→TD) was carried out under the conditions shown in Table 4.

[Table 4]

| | Ex. 2-1 | Ex. 2-2 | Ex. 2-3 | Ex. 2-4 | Ex. 2-5 | Ex. 2-6 | Ex. 2-7 | Ex. 2-8 | Ex. 2-9 | Ex. 2-10 | Comp . Ex. 2-1 | Comp . Ex. 2-2 | Comp . Ex. 2-3 | Comp . Ex. 2-4 |
|---|---|---|---|---|---|---|---|---|---|---|---|---|---|---|
| Cat. | Cat. 1 | Cat. 3 | Cat. 4 | Cat. 7 | Cat. 11 | Cat. 14 | Cat. 16 | Cat. 18 | Cat. 20 | Cat. 22 | Cat. 3 | Cat. 26 | Cat. 27 | Cat. 7 |
| PE used | Ex. 1-1 | Ex. 1-3 | Ex. 1-4 | Ex. 1-7 | Ex. 1-11 | Ex. 1-14 | Ex. 1-16 | Ex. 1-18 | Ex. 1-20 | Ex. 1-22 | Comp . Ex. 1-1 | Comp . Ex. 1-2 | Comp . Ex. 1-3 | Comp . Ex. 1-4 |
| Oven temp. (°C) | 125 | 125 | 125 | 124 | 124 | 125 | 124 | 124 | 124 | 124 | 124 | - | - | 125 |
| Draw ratio | 5x5 | 5x5 | 5x5 | 5x5 | 5x5 | 5x5 | 5x5 | 5x5 | 5x5 | 5x5 | 5x5 | - | - | 5x5 |
| Draw rate (%/s) | 200 | 200 | 200 | 200 | 200 | 200 | 200 | 200 | 200 | 200 | 200 | - | - | 200 |

**<Experimental Example 2: Evaluation of properties of biaxially oriented films>**

The properties of the oriented films prepared in Examples 2-1 to 2-10 and Comparative Examples 2-1 to 2-4 were evaluated, and the results are shown in Tables 5 and 6 below. The evaluation methods of the oriented film properties are as follows.

(1) Haze: Measured according to ASTM 1003.

(2) Tensile properties (1% modulus, elongation): Measured in MD/TD directions according to ASTM D 882.

(3) Tear strength: Measured in MD/TD directions according to ASTM 1922.

(4) Shrinkage ratio: Measured the change in length after shrinkage for 7 minutes at 100 °C or 120 °C according to ASTM D 1204. Specifically, the shrinkage ratio (%) was calculated as "[1 - (length after shrinkage)/(length before shrinkage)] × 100".

[Table 5]

| | | Ex. 2-1 | Ex. 2-2 | Ex. 2-3 | Ex. 2-4 | Ex. 2-5 | Ex. 2-6 | Ex. 2-7 | Ex. 2-8 | Ex. 2-9 | Ex. 2-10 |
|---|---|---|---|---|---|---|---|---|---|---|---|
| Catalyst | | Cat.1 | Cat.3 | Cat.4 | Cat.7 | Cat.11 | Cat.14 | Cat.16 | Cat.18 | Cat.20 | Cat.22 |
| PE used | | Ex. 1-1 | Ex. 1-3 | Ex. 1-4 | Ex. 1-7 | Ex.1-11 | Ex. 1-14 | Ex. 1-16 | Ex. 1-18 | Ex. 1-20 | Ex. 1-22 |
| Thickness (μm) | | 21-28 | 19-20 | 18-23 | 19-24 | 20-27 | 18-25 | 20-28 | 17-25 | 19-24 | 21-23 |
| Haze (%) | | 9.0 | 8.5 | 5.6 | 8.0 | 5.2 | 8.2 | 7.6 | 5.9 | 8.1 | 6.2 |
| 1% Modulus (MPa) | MD | 452 | 389 | 488 | 452 | 392 | 401 | 443 | 452 | 415 | 378 |
| | TD | 509 | 515 | 681 | 502 | 508 | 520 | 598 | 559 | 508 | 424 |
| | MD+TD | 961 | 904 | 1169 | 954 | 900 | 921 | 1041 | 1011 | 923 | 802 |
| Tensile elongatio n (%) | MD | 227 | 124 | 91 | 233 | 129 | 143 | 102 | 115 | 98 | 109 |
| | TD | 99 | 106 | 93 | 130 | 110 | 129 | 172 | 178 | 110 | 135 |
| | MD+TD | 326 | 230 | 184 | 363 | 239 | 272 | 274 | 293 | 208 | 244 |
| Tear strength (g/μm) | MD | 0.38 | 0.21 | 0.29 | 0.43 | 0.22 | 0.26 | 0.36 | 0.41 | 0.11 | 0.52 |
| | TD | 0.32 | 0.25 | 0.29 | 0.35 | 0.27 | 0.28 | 0.47 | 0.44 | 0.75 | 0.78 |
| | MD+TD | 0.7 | 0.46 | 0.58 | 0.78 | 0.49 | 0.54 | 0.83 | 0.85 | 0.86 | 1.3 |
| Shrinkage ratio (%, @120°C) | MD | 4.9 | 9 | 5.7 | 8.7 | 10.1 | 9.1 | 7.1 | 6.4 | 9.2 | 8.8 |
| | TD | 7.5 | 12.5 | 9.8 | 12.9 | 12.2 | 10.7 | 8.2 | 7.7 | 10.1 | 11.2 |
| | MD+TD | 12.4 | 21.5 | 15.5 | 21.6 | 22.3 | 19.8 | 15.3 | 14.1 | 19.3 | 20 |

[Table 6]

| | | Comp. Ex. 2-1 | Comp. Ex. 2-2 | Comp. Ex. 2-3 | Comp. Ex. 2-4 |
|---|---|---|---|---|---|
| Catalyst | | Cat.3 | Cat.26 | Cat.27 | Cat.7 |
| PE used | | Comp. Ex. 1-1 | Comp. Ex. 1-2 | Comp. Ex. 1-3 | Comp. Ex. 1-4 |
| Thickness (μm) | | 16 ~ 28 | - | - | 17 ~ 27 |
| Haze (%) | | 7.9 | - | - | 9.3 |
| 1% Modulus (MPa) | MD | 357 | - | - | 372 |
| | TD | 367 | - | - | 384 |
| | MD+TD | 724 | - | - | 756 |
| Tensile elongation (%) | MD | 508 | - | - | 532 |
| | TD | 643 | - | - | 577 |
| | MD+TD | 1151 | - | - | 1109 |
| Tear strength (g/μm) | MD | 1.34 | - | - | 2.11 |
| | TD | 0.48 | - | - | 1.33 |
| | MD+TD | 1.82 | - | - | 3.44 |
| Shrinkage ratio (%, @120°C) | MD | 5.5 | - | - | 3.3 |
| | TD | 2.9 | - | - | 3.0 |
| | MD+TD | 8.4 | - | - | 6.6 |

Referring to the table, it was confirmed that stretching of the biaxially oriented films of Examples 2-1 to 2-10, obtained by stretching the polyethylene copolymers of Examples 1-1 to 1-10, was excellent, and that the 1% modulus, which is a representative index of stiffness, was superior to that of Comparative Examples. That is, it was confirmed that the higher the high-crystalline content or the greater the backbone weight-average molecular weight of high-crystalline fraction, the more the 1% modulus tended to improve.

In particular, although the polyethylene copolymers of Example 1-3 and Comparative Example 1-1 and of Example 1-7 and Comparative Example 1-4 were each prepared using the same catalyst, the high-crystalline content and the backbone weight-average molecular weight of high-crystalline fraction of Comparative Example 1-1 were inferior to those of Example 1-3, and the backbone weight-average molecular weight of high-crystalline fraction of Comparative Example 1-4 was inferior to that of Example 1-7. Accordingly, although stretching of Comparative Examples 2-1 and 2-4 was possible, the results, including low 1% modulus values and very high elongation at break, indicated that stretching was not sufficiently achieved. Since the biaxially oriented film is already in a stretched state, a high elongation at break, which evaluates additional stretching, is considered to indicate less-developed crystal orientation, and thus stretchability can be regarded as inferior.

## Claims

**1.** A polyethylene copolymer,

wherein a backbone weight-average molecular weight of high-crystalline fraction ($Mw,_{T>90°C}$) eluted at an elution temperature exceeding 90 °C during cross fractionation chromatography (CFC) analysis is 90,000 g/mol or more, and
a content ratio of high-crystalline fraction ($TREF_{T>90°C}$) eluted at an elution temperature exceeding 90 °C during cross fractionation chromatography (CFC) analysis is 45.0 wt% or more of total eluted fraction.

**2.** The polyethylene copolymer of Claim 1,
wherein a density measured in accordance with ASTM D792 is 0.920 g/cm$^3$ or more and 0.940 g/cm$^3$ or less.

**3.** The polyethylene copolymer of Claim 1,
wherein a melt index ($MI_{2.16}$) measured in accordance with ASTM D1238 is 0.5 g/10min or more and 5.0 g/10min or

less.

**4.** The polyethylene copolymer of Claim 1,

wherein MFRR ($MFR_{21.6}/MFR_{2.16}$) is 15 or more and 40 or less, and
wherein $MFR_{21.6}$ is measured at 190 °C under a load of 21.6 kg in accordance with ISO 1133, and $MFR_{2.16}$ is measured at 190 °C under a load of 2.16 kg in accordance with ISO 1133.

**5.** The polyethylene copolymer of Claim 1,
wherein the polyethylene copolymer is an ethylene/1-hexene copolymer.

**6.** A biaxially oriented film, comprising the polyethylene copolymer of Claim 1.

**7.** The biaxially oriented film of Claim 6,
wherein the film has an MD draw ratio of 4 or more, and a TD draw ratio of 5 or more.

**8.** The biaxially oriented film of Claim 6,

wherein the film satisfies an MD draw ratio of 4 or more and a TD draw ratio of 5 or more, and
the film has a sum of MD 1% modulus and TD 1% modulus measured in accordance with ASTM D 882 of 800 MPa or more.

**9.** The biaxially oriented film of Claim 6,

wherein the film satisfies an MD draw ratio of 4 or more and a TD draw ratio of 5 or more, and
the film has a sum of MD shrinkage ratio and TD shrinkage ratio measured after 7 minutes of shrinkage at 120 °C in accordance with ASTM D 1204 of 25.0% or less.

# INTERNATIONAL SEARCH REPORT

International application No.
**PCT/KR2025/005352**

## A. CLASSIFICATION OF SUBJECT MATTER

**C08F 210/16**(2006.01)i; **C08F 4/659**(2006.01)i; **C08F 4/6592**(2006.01)i; **C08J 5/18**(2006.01)i; **B29C 55/12**(2006.01)i

According to International Patent Classification (IPC) or to both national classification and IPC

## B. FIELDS SEARCHED

Minimum documentation searched (classification system followed by classification symbols)

C08F 210/16(2006.01); B29C 55/12(2006.01); B32B 27/08(2006.01); B32B 27/32(2006.01); C08J 5/18(2006.01); C08L 23/08(2006.01); C08L 23/14(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리에틸렌(polyethylene), 이축연신(biaxial elongation), 필름(film), 에틸렌/1-헥센 공중합체(ethylene/1-hexene copolymer)

## C. DOCUMENTS CONSIDERED TO BE RELEVANT

| Category* | Citation of document, with indication, where appropriate, of the relevant passages | Relevant to claim No. |
|---|---|---|
| X | KR 10-2024-0063035 A (LG CHEM, LTD.) 09 May 2024 (2024-05-09) paragraphs [0046]-[0602]; claims 1-12; table 1; manufacturing examples 3, 4 | 1-9 |
| A | KR 10-2024-0057689 A (LG CHEM, LTD.) 03 May 2024 (2024-05-03) claims 1-3 | 1-9 |
| A | KR 10-2024-0040200 A (HANWHA TOTALENERGIES PETROCHEMICAL CO., LTD.) 28 March 2024 (2024-03-28) claims 1, 5 | 1-9 |
| A | WO 2024-000090 A1 (UNIVATION TECHNOLOGIES, LLC et al.) 04 January 2024 (2024-01-04) claim 1 | 1-9 |
| A | WO 2019-243348 A1 (SABIC GLOBAL TECHNOLOGIES B.V.) 26 December 2019 (2019-12-26) claim 1 | 1-9 |

☐ Further documents are listed in the continuation of Box C.　☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 July 2025** | **21 July 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2025/005352**

| Patent document cited in search report | Publication date (day/month/year) | Patent family member(s) | Publication date (day/month/year) |
|---|---|---|---|
| KR 10-2024-0063035 A | 09 May 2024 | CN 118742601 A | 01 October 2024 |
| | | EP 4467604 A1 | 27 November 2024 |
| | | KR 10-2024-0085847 A | 17 June 2024 |
| | | US 2025-0154302 A1 | 15 May 2025 |
| | | WO 2024-096612 A1 | 10 May 2024 |
| | | WO 2024-096636 A1 | 10 May 2024 |
| KR 10-2024-0057689 A | 03 May 2024 | CN 118076691 A | 24 May 2024 |
| | | EP 4400541 A1 | 17 July 2024 |
| | | US 2025-0011588 A1 | 09 January 2025 |
| | | WO 2024-063269 A1 | 28 March 2024 |
| | | WO 2024-063415 A1 | 28 March 2024 |
| KR 10-2024-0040200 A | 28 March 2024 | KR 10-2789936 B1 | 01 April 2025 |
| WO 2024-000090 A1 | 04 January 2024 | CN 119816416 A | 11 April 2025 |
| | | EP 4532204 A1 | 09 April 2025 |
| | | KR 10-2025-0029897 A | 05 March 2025 |
| | | WO 2024-006106 A1 | 04 January 2024 |
| WO 2019-243348 A1 | 26 December 2019 | EP 3810420 A1 | 28 April 2021 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020240086289
- KR 1020250049749